(19) Europäisches Patentamt
European Patent Office
Office européen des brevets

(11) EP 4 503 773 A1

(12) EUROPEAN PATENT APPLICATION
published in accordance with Art. 153(4) EPC

(43) Date of publication:
05.02.2025 Bulletin 2025/06

(21) Application number: 23781351.4

(22) Date of filing: 29.03.2023

(51) International Patent Classification (IPC):
H04W 56/00 (2009.01)        H04W 72/04 (2023.01)
H04W 48/10 (2009.01)        H04L 27/26 (2006.01)
H04W 92/18 (2009.01)        H04W 72/20 (2023.01)

(52) Cooperative Patent Classification (CPC):
H04L 27/26; H04W 48/10; H04W 56/00;
H04W 72/04; H04W 72/20; H04W 92/18

(86) International application number:
PCT/KR2023/004182

(87) International publication number:
WO 2023/191496 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.03.2022   KR 20220039065
               15.04.2022   KR 20220047048
               04.05.2022   KR 20220055740
               28.07.2022   KR 20220094101
               09.08.2022   KR 20220099543
               17.10.2022   US 202263416908 P
               27.10.2022   KR 20220140452
               15.11.2022   KR 20220152802

(71) Applicant: LG Electronics Inc.
Yeongdeungpo-gu
Seoul 07336 (KR)

(72) Inventors:
• HWANG, Daesung
  Seoul 06772 (KR)
• LEE, Seungmin
  Seoul 06772 (KR)
• KO, Woosuk
  Seoul 06772 (KR)

(74) Representative: Plasseraud IP
104 Rue de Richelieu
CS92104
75080 Paris Cedex 02 (FR)

(54) **METHOD AND DEVICE FOR PERFORMING NR SIDELINK SYNCHRONIZATION IN UNLICENSED BAND**

(57)    A method for operating a first device (100) in a wireless communication system is proposed. The method may comprise the steps of: obtaining SL synchronization priority information set to GNSS-based synchronization or base station-based synchronization; selecting at least one synchronization criterion on the basis of the SL synchronization priority information; obtaining time synchronization from the at least one synchronization criterion; and transmitting an S-SSB including PSBCH, S-PSS, and S-SSS on an unlicensed band, on the basis of the time synchronization.

FIG. 15

```
obtaining SL synchronization priority order information
configured as GNSS-based synchronization
or based station-based synchronization          — S1510

selecting at least one synchronization reference,
based on SL synchronization priority order information   — S1520

obtaining time synchronization
from at least one synchronization reference      — S1530

transmitting an S-SSB including a PSBCH,
an S-PSS, and an S-SSS, on an unlicensed band,
based on time synchronization                    — S1540
```

EP 4 503 773 A1

## Description

## TECHNICAL FIELD

This disclosure relates to a wireless communication system.

## BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PCS interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Vehicle-to-everything (V2X) communication may also be supported in NR.

## DISCLOSURE

## TECHNICAL SOLUTION

According to an embodiment of the present disclosure, a method for performing, by a first device, wireless communication may be proposed. For example, the method may comprise: obtaining sidelink, SL, synchronization priority order information configured as global navigation satellite system, GNSS, -based synchronization or based station-based synchronization; selecting at least one synchronization reference, based on the SL synchronization priority order information; obtaining time synchronization from the at least one synchronization reference; and transmitting a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

According to an embodiment of the present disclosure, a first device performing wireless communication may be proposed. For example, the first device may comprise: at least one transceiver; at least one processor; and at least one memory operably connected to the at least one processor and storing instructions. For example, the instructions, based on being executed by the at least one processor, may cause the first device to perform operations. For example, the operations may comprise: obtaining sidelink, SL, synchronization priority order information configured as global navigation satellite system, GNSS, -based synchronization or based station-based synchronization; selecting at least one synchronization reference, based on the SL synchronization priority order information; obtaining time synchronization from the at least one synchronization reference; and transmitting a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

According to an embodiment of the present disclosure, a device adapted to control a first user equipment, UE, may be proposed. For example, the device may comprise: at least one processor; and at least one memory operably connected to the at least one processor and storing instructions. For example, the instructions, based on being executed by the at least one processor, may cause the first UE to perform operations. For example, the operations may comprise: obtaining sidelink, SL, synchronization priority order information configured as global navigation satellite system, GNSS, -based synchronization or based station-based synchronization; selecting at least one synchronization reference, based on the SL synchronization priority order information; obtaining time synchronization from the at least one synchronization reference; and transmitting a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

According to an embodiment of the present disclosure, a non-transitory computer-readable storage medium storing instructions may be proposed. For example, the instructions, based on being executed, may cause a first device to: obtain sidelink, SL, synchronization priority order information configured as global navigation satellite system, GNSS, -based synchronization or based station-based synchronization; select at least one synchronization reference, based on the SL synchronization priority order information; obtain time synchronization from the at least one synchronization reference; and transmit a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

According to an embodiment of the present disclosure, a method for performing, by a second device, wireless communication may be proposed. For example, the method may comprise: receiving, from a first device, a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, wherein the S-SSB is transmitted by the first device based on time synchronization obtained from at least one synchronization reference, wherein the at least one synchronization reference may be selected by the first device based on a sidelink, SL, synchronization priority order information, wherein the SL synchronization priority order information may be configured as global navigation satellite system, GNSS, -based synchronization or based station-based synchronization.

According to an embodiment of the present disclosure, a second device performing wireless communication may be proposed. For example, the second device may comprise: at least one transceiver; at least one processor; and at least one memory operably connected to the at least one processor and storing instructions. For example, the instructions, based on being executed by the at least one processor, may cause the second device to perform operations. For example, the operations may comprise: receiving, from a first device, a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, wherein the S-SSB may be transmitted by the first device based on time synchronization obtained from at least one synchronization reference, wherein the at least one synchronization reference may be selected by the first device based on a sidelink, SL, synchronization priority order information, wherein the SL synchronization priority order information may be configured as global navigation satellite system, GNSS, -based synchronization or based station-based synchronization.

## ADVANTAGEOUS EFFECTS

The user equipment (UE) may efficiently perform SL communication.

## BRIEF DESCRIPTION OF THE DRAWINGS

FIG. 1 shows a structure of an NR system, based on an embodiment of the present disclosure.

FIG. 2 shows a radio protocol architecture, based on an embodiment of the present disclosure.

FIG. 3 shows a structure of a radio frame of an NR, based on an embodiment of the present disclosure.

FIG. 4 shows a structure of a slot of an NR frame, based on an embodiment of the present disclosure.

FIG. 5 shows an example of a BWP, based on an embodiment of the present disclosure.

FIG. 6 shows a procedure of performing V2X or SL communication by a UE based on a transmission mode, based on an embodiment of the present disclosure.

FIG. 7 shows three cast types, in accordance with an embodiment of the present disclosure.

FIG. 8 shows an example of a wireless communication system supporting an unlicensed band, based on an embodiment of the present disclosure.

FIG. 9 shows a method of occupying resources in an unlicensed band, based on an embodiment of the present disclosure.

FIG. 10 shows a case in which a plurality of LBT-SBs are included in an unlicensed band, based on an embodiment of the present disclosure.

FIG. 11 shows CAP operations performed by a base station to transmit a downlink signal through an unlicensed band, based on an embodiment of the present disclosure.

FIG. 12 shows type 1 CAP operations performed by a UE to transmit an uplink signal, based on an embodiment of the present disclosure.

FIG. 13 shows a structure of a plurality of RB sets through which an S-SSB is transmitted, according to one embodiment of the present disclosure.

FIG. 14 shows a procedure for a first device to transmit an S-SSB to a second device, according to one embodiment of the present disclosure.

FIG. 15 shows a procedure for a first device to perform wireless communication, according to one embodiment of the present disclosure.

FIG. 16 shows a procedure for a second device to perform wireless communication, according to one embodiment of the present disclosure.

FIG. 17 shows a communication system 1, based on an embodiment of the present disclosure.

FIG. 18 shows wireless devices, based on an embodiment of the present disclosure.

FIG. 19 shows a signal process circuit for a transmission signal, based on an embodiment of the present disclosure.

FIG. 20 shows another example of a wireless device, based on an embodiment of the present disclosure.

FIG. 21 shows a hand-held device, based on an embodiment of the present disclosure.

FIG. 22 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For the sake of clarity, the description focuses on 5G NR, but the technical ideas of one embodiment of the present disclosure are not limited thereto.

For terms and techniques used herein that are not specifically described, reference may be made to wireless communication standards documents published prior to the filing of this specification.

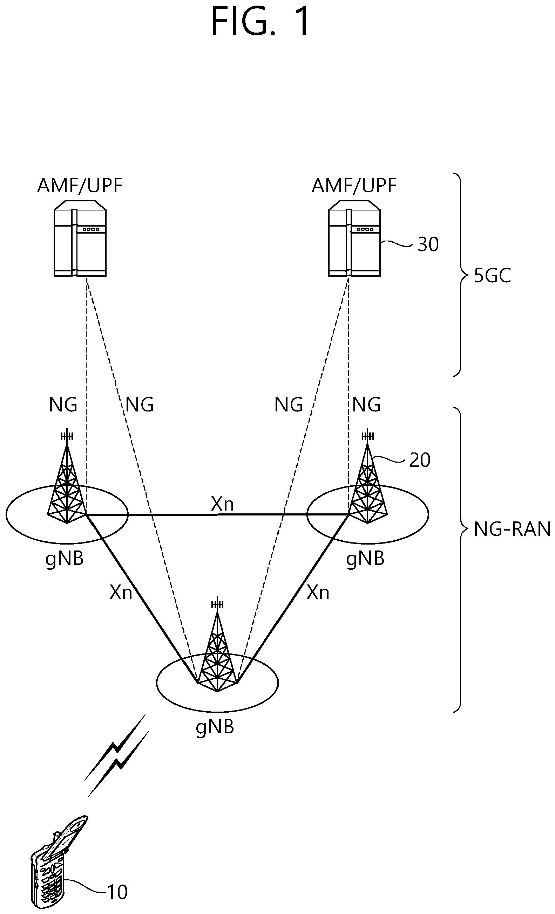

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

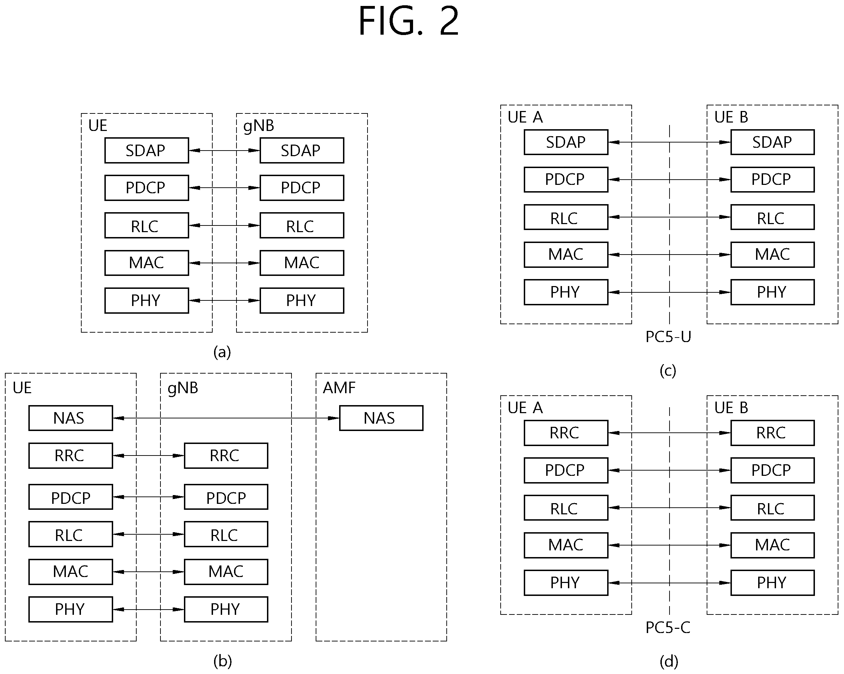

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

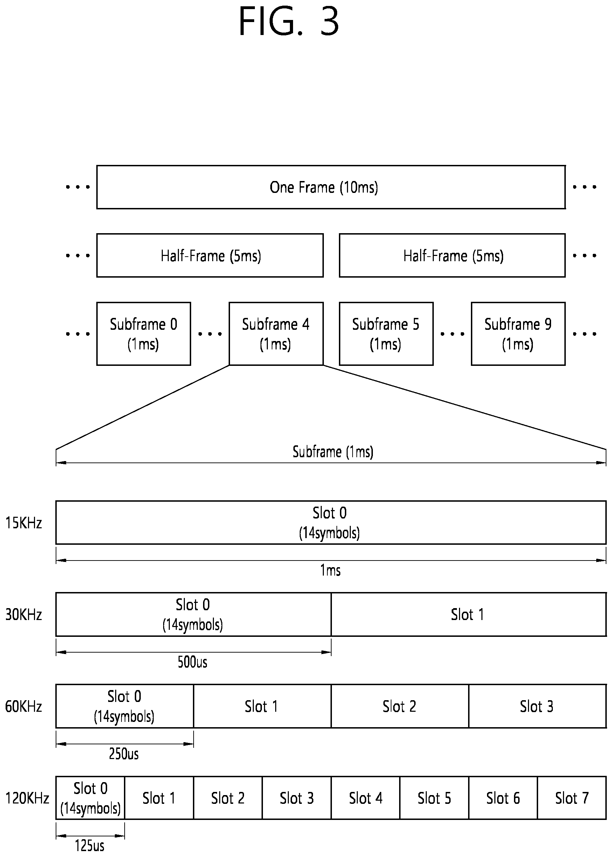

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 1 shows the number of symbols per slot ($N^{slot}_{symb}$), the number of slots per frame ($N^{frame,u}_{slot}$), and the number of slots per subframe ($N^{subframe,u}_{slot}$), according to an SCS configuration (u), when Normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15kHz (u=0) | 14 | 10 | 1 |
| 30kHz (u=1) | 14 | 20 | 2 |
| 60kHz (u=2) | 14 | 40 | 4 |
| 120kHz (u=3) | 14 | 80 | 8 |
| 240kHz (u=4) | 14 | 160 | 16 |

Table 2 shows the number of symbols per slot, the number of slots per frame and the number of slots per subframe according to SCS, when Extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
| --- | --- | --- |
| FR1 | 410MHz - 7125MHz | 15, 30, 60kHz |
| FR2 | 24250MHz - 52600MHz | 60, 120, 240kHz |

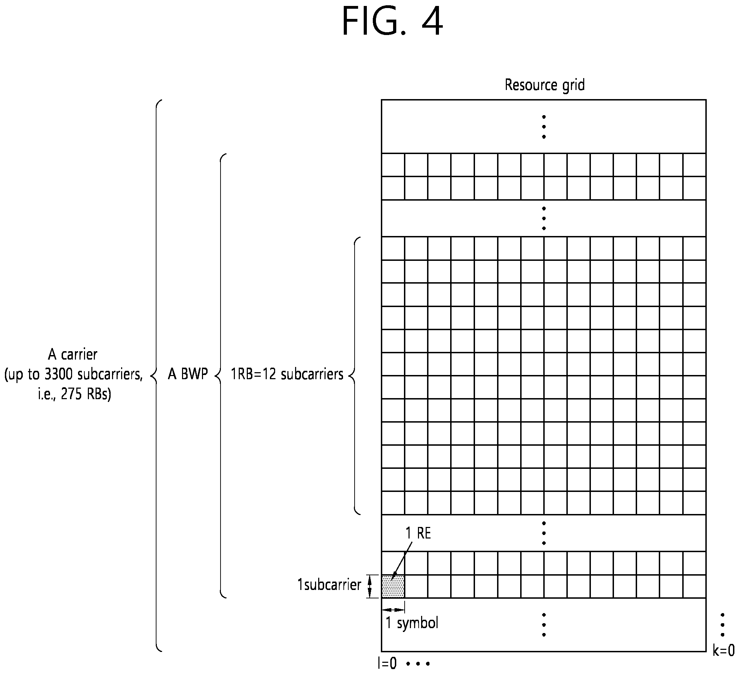

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

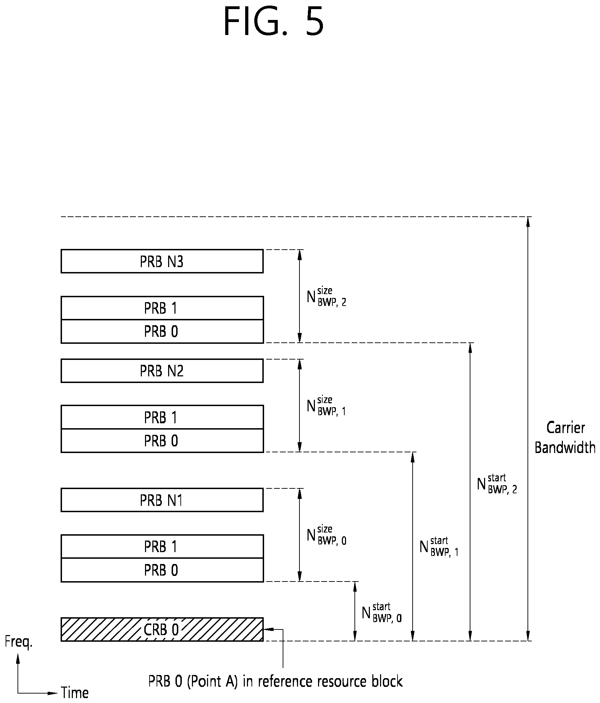

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

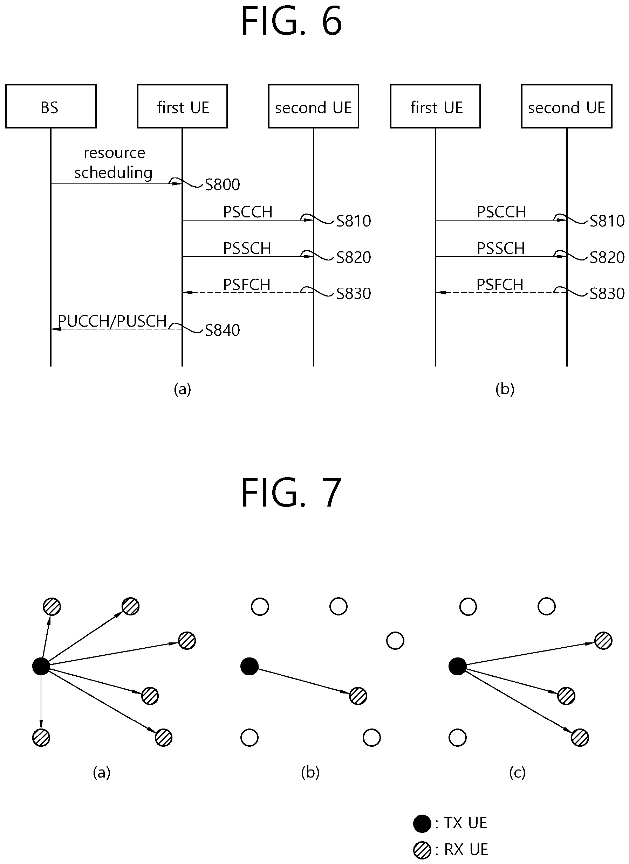

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subchannel}(N^{SL}_{subchannel}+1)/2))$ bits when the value of the higher layer parameter sl-MaxNumPerReserve is configured to 2; otherwise ceiling $\log_2(N^{SL}_{subchannel}(N^{SL}_{subchannel}+1)(2N^{SL}_{subchannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, in accordance with an embodiment of the present disclosure. The embodiment of FIG. 7 may be combined with various embodiments of the present disclosure. Specifically, FIG. 7(a) shows broadcast-type SL communication, FIG. 7(b) shows unicast type-SL communication, and FIG. 7(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r''_i - T_3$, where $r''_i$ is the slot with the smallest slot index among $(r_0, r_1, r_2, ...)$ and $(r'_0, r'_1, r'_2, ...)$, and $T_3$ is equal to $T^{SL}_{proc,1}$, where $T^{SL}_{proc,1}$ is defined in slots, and where $\mu_{SL}$ is the SCS configuration of the SL BWP.

The following higher layer parameters affect this procedure:
sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ may denote the set of slots which belongs to the sidelink resource pool.
For example, a UE may select a set of candidate resources (Sa) based on Table 8. For example, when resource (re)selection is triggered, a UE may select a candidate resource set (Sa) based on Table 8. For example, when re-evaluation or pre-emption is triggered, a UE may select a candidate resource set (Sa) based on Table 8.

[Table 8]

| The following steps are used: |
|---|
| 1) A candidate single-slot resource for transmission $R_{x,y}$ is defined as a set of $L_{subCH}$ contiguous sub-channels with sub-channel $x+j$ in slot $t'^{SL}_y$ where $j = 0,..., L_{subCH} - 1$ The UE shall assume that any set of $L_{subCH}$ contiguous sub-channels included in the corresponding resource pool within the time interval $[n + T_1, n + T_2]$ correspond to one candidate single-slot resource, where <br><br> - selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP; |

(continued)

- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T_{proc,0}^{SL})$ where $T_0$ is defined above and $T_{proc,0}^{SL}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the $i$-th field in *sl-Thres-RSRP-List,* where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.
- for any periodicity value allowed by the higher layer parameter *sl-ResourceReservePeriodList* and a hypothetical SCI format 1-A received in slot with '*Resource reservation period* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and '*Resource reservation period*' field, if present, and '*Priority*' field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

$$Q = \left\lceil \frac{T_{scal}}{P_{rsvp\_RX}} \right\rceil$$

c) the SCI format received in slot $t'^{SL}_m$ or the same SCI format which, if and only if the '*Resource reservation period* field is present in the received SCI format 1-A, is assumed to be received in slot(s) $t'^{SL}_{m+q\times P'_{rsvp\_RX}}$ determines according to clause 8.1.5 the set of resource blocks and slots which overlaps with $R_{x,y+j\times P'_{rsvp\_TX}}$ for $q$=1, 2, ..., $Q$ and $j$=0, 1, ..., $C_{resel}$ - 1. Here, $P'_{rsvp\_RX}$ is $P_{rsvp\_RX}$ converted to units of logical slots according to clause 8.1.7, if $P_{rsvp\_RX} < T_{scal}$ and $n' - m \leq P'_{rsvp\_RX}$, where $t'^{SL}_{n'} = n$ if slot $n$ belongs to the set $\left( t'^{SL}_0, t'^{SL}_1, \ldots, t'^{SL}_{T'max-1} \right)$, otherwise slot $t'^{SL}_{n'}$ is the first slot after slot $n$ belonging to the set $\left( t'^{SL}_0, t'^{SL}_1, \ldots, t'^{SL}_{T'max-1} \right)$; otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

(continued)

If a resource $r_i'$ from the set $(r_0', r_1', r_2', ...)$ meets the conditions below then the UE shall report pre-emption of the resource $r_i'$ to higher layers

- $r_i'$ is not a member of $S_A$, and
- $r_i'$ meets the conditions for exclusion in step 6, with $Th(prio_{RX}, prio_{TX})$ set to the final threshold after executing steps 1)-7), i.e. including all necessary increments for reaching $X \cdot M_{total}$, and
- the associated priority $prio_{RX}$, satisfies one of the following conditions:
  - *sl-PreemptionEnable* is provided and is equal to 'enabled' and $prio_{TX} > prio_{RX}$
  - *sl-PreemptionEnable* is provided and is not equal to 'enabled', and $prio_{RX} < prio_{pre}$ and $prio_{TX} > prio_{RX}$

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

For example, an RB set may be a basic unit which is a target of a channel sensing operation. For example, the channel sensing operation may include a listen before talk (LBT) operation.

For example, an RB set may be a basic unit which is a target of a channel sensing operation. For example, the channel sensing operation may include a listen before talk (LBT) operation.

For example, an RB set may be a basic unit which is a target of a channel sensing operation. For example, the channel sensing operation may include a listen before talk (LBT) operation.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

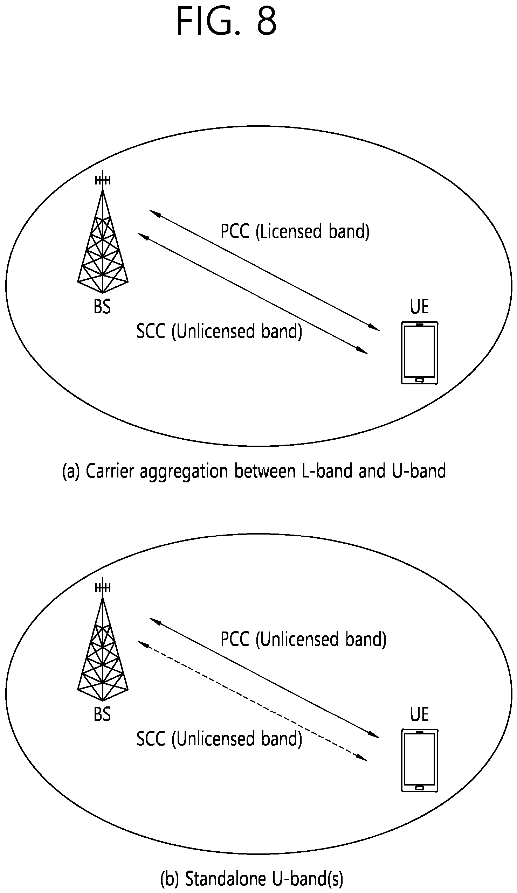

FIG. 8 shows an example of a wireless communication system supporting an unlicensed band, based on an embodiment of the present disclosure. For example, FIG. 8 may include an unlicensed spectrum (NR-U) wireless communication system. The embodiment of FIG. 8 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 8, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 8. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 8, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.

- Channel: a carrier or a part of a carrier composed of a contiguous RB set in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of $T_{sl} = 9$ us. The base station or the UE senses a channel during a sensing slot duration. If power detected for at least 4 us within the sensing slot duration is less than an energy detection threshold $X_{thresh}$, the sensing slot duration $T_{sl}$ is considered to be idle. Otherwise, the sensing slot duration $T_{sl}$ = 9 us is considered to be busy. CAP may also be referred to as listen before talk (LBT).

- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB 1, the PDSCH carrying SIB1, and/or non-zero power CSI-RS.

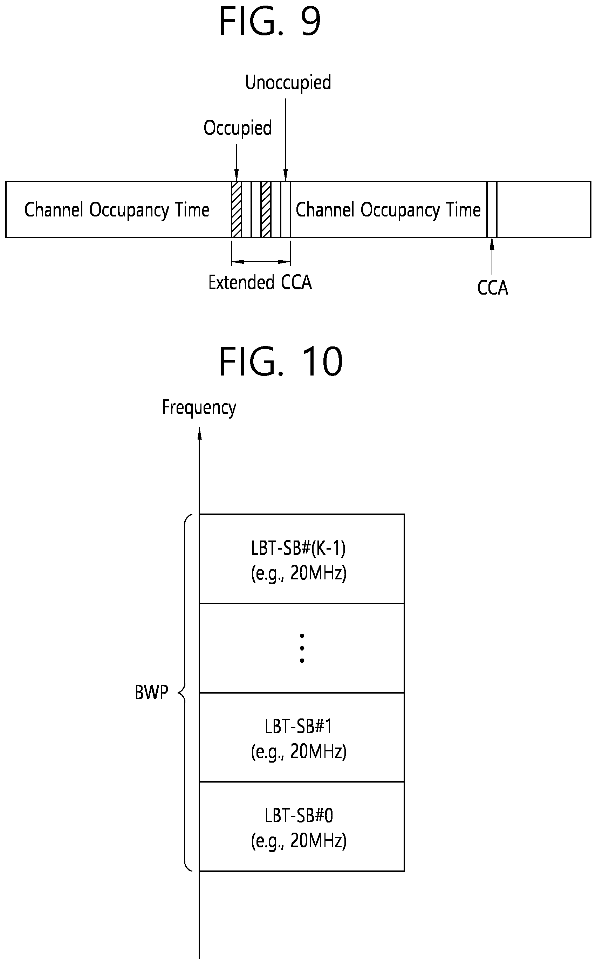

FIG. 9 shows a method of occupying resources in an unlicensed band, based on an embodiment of the present disclosure. The embodiment of FIG. 9 may be combined with various embodiments of the present disclosure.

Referring to FIG. 9, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., $X_{Thresh}$) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 9 shows an example of the channel access procedure (CAP) supported in NR-U.

[Table 9]

| | Type | Explanation |
|---|---|---|
| DL | Type 1 CAP | CAP with random back-off<br>- time duration spanned by the sensing slots that are sensed to be idle before a downlink transmission(s) is random |
| | Type 2 CAP - Type 2A, 2B, 2C | CAP without random back-off<br>- time duration spanned by sensing slots that are sensed to be idle before a downlink transmission(s) is deterministic |
| UL or SL | Type 1 CAP | CAP with random back-off<br>- time duration spanned by the sensing slots that are sensed to be idle before an uplink or sidelink transmission(s) is random |
| | Type 2 CAP - Type 2A, 2B, 2C | CAP without random back-off<br>- time duration spanned by sensing slots that are sensed to be idle before an uplink or sidelink transmission(s) is deterministic |

Referring to Table 9, the LBT type or CAP for DL/UL/SL transmission may be defined. However, Table 9 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A RB set included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 10 shows a case in which a plurality of LBT-SBs are included in an unlicensed band, based on an embodiment of the present disclosure. The embodiment of FIG. 10 may be combined with various embodiments of the present disclosure.

Referring to FIG. 10, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB # (K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:

- Fixed to lowest priority for padding buffer status report (BSR) and recommended bit rate MAC CE;
- Fixed to highest priority for SRB0, SRB 1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 10 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

[Table 10]

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

(1) Type 1 downlink (DL) CAP Method

In the type 1 DL CAP, the length of a time duration spanned by sensing slots sensed to be idle before transmission(s) may be random. The type 1 DL CAP may be applied to the following transmissions:

- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

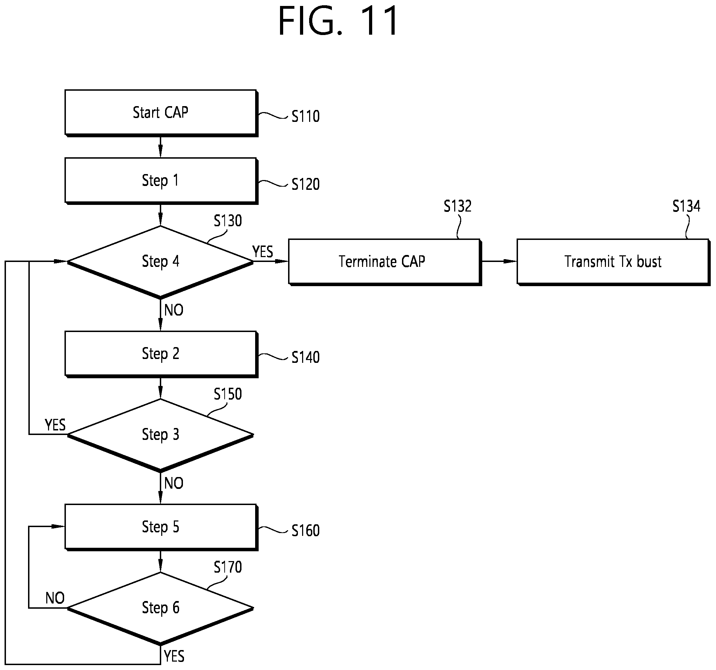

FIG. 11 shows CAP operations performed by a base station to transmit a downlink signal through an unlicensed band, based on an embodiment of the present disclosure. The embodiment of FIG. 11 may be combined with various embodiments of the present disclosure.

Referring to FIG. 11, the base station may sense whether a channel is idle for sensing slot durations of a defer duration $T_d$. Then, if a counter N is zero, the base station may perform transmission (S134). In this case, the base station may adjust the counter N by sensing the channel for additional sensing slot duration(s) according to the following steps:

Step 1) (S120) The base station sets N to $N_{init}$ (N= $N_{init}$), where $N_{init}$ is a random number uniformly distributed between 0 and $CW_p$. Then, step 4 proceeds.
Step 2) (S140) If N>0 and the base station determines to decrease the counter, the base station sets N to N-1 (N=N-1).
Step 3) (5150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration $T_d$ or all the slots of the additional defer duration $T_d$ are detected to be idle.
Step 6) (S170) If the channel is sensed to be idle for all the slot durations of the additional defer duration $T_d$ (Y), step 4 proceeds. Otherwise (N), step 5 proceeds.

Table 11 shows that $m_p$, a minimum contention window (CW), a maximum CW, a maximum channel occupancy time (MCOT), and an allowed CW size, which are applied to the CAP, vary depending on channel access priority classes.

[Table 11]

| Channel Access Priority Class (p) | $m_p$ | $CW_{min\ p}$ | $CW_{max,\ p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 12, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration Ta is configured in the following order: duration Tf (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on HARQ-ACK feedback (e.g., the ratio of ACK or NACK) for a previous DL burst (e.g., PDSCH) (CW size update). For example, $CW_p$ may be initialized to $CW_{min,p}$ based on the HARQ-ACK feedback for the previous DL burst. Alternatively, $CW_p$ may be increased to the next higher allowed value or maintained as it is.

(2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration $T_{short\_dl}$ = 25 us. Herein, $T_{short\_dl}$ includes the duration Tf (=16 us) and one sensing slot duration immediately after the duration $T_f$, where the duration $T_f$ includes a sensing slot at the beginning thereof.

- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for Tf = 16 us. Tf includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

(1) Type 1 uplink (UL) CAP Method

In the type 1 UL CAP, the length of a time duration spanned by sensing slots sensed to be idle before transmission(s) is random. The type 1 UL CAP may be applied to the following transmissions.

- PUSCH/SRS transmission(s) scheduled and/or configured by the base station
- PUCCH transmission(s) scheduled and/or configured by the base station
- Transmission(s) related to a random access procedure (RAP)

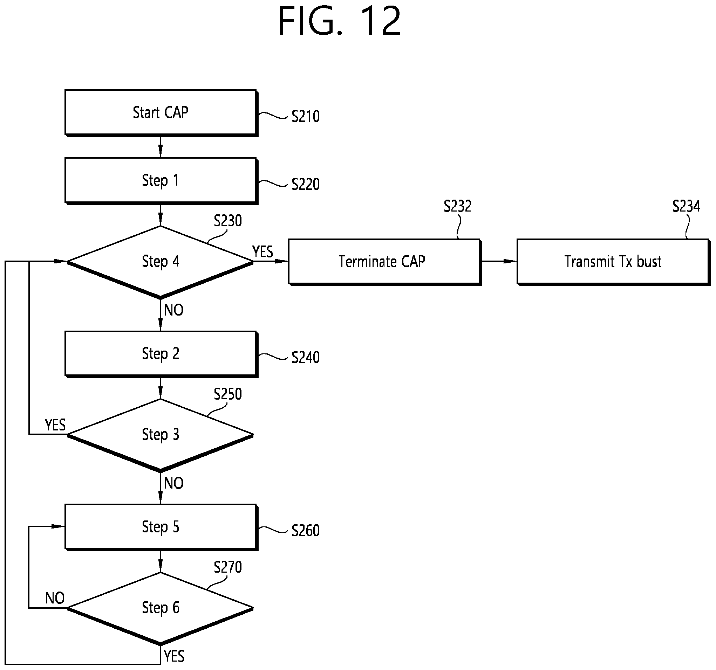

FIG. 12 shows type 1 CAP operations performed by a UE to transmit an uplink signal, based on an embodiment of the present disclosure. The embodiment of FIG. 12 may be combined with various embodiments of the present disclosure.

Referring to FIG. 12, the UE may sense whether a channel is idle for sensing slot durations of a defer duration $T_d$. Then, if a counter N is zero, the UE may perform transmission (S234). In this case, the UE may adjust the counter N by sensing the channel for additional sensing slot duration(s) according to the following steps:

Step 1) (S220) The UE sets N to $N_{init}$ (N = $N_{init}$), where $N_{init}$ is a random number uniformly distributed between 0 and $CW_p$. Then, step 4 proceeds.

Step 2) (S240) If N>0 and the UE determines to decrease the counter, the UE sets N to N-1 (N = N-1).

Step 3) (S250) The UE senses the channel for the additional sensing slot duration. If the additional sensing slot duration is idle (Y), step 4 proceeds. Otherwise (N), step 5 proceeds.

Step 4) (S230) If N=0 (Y), the UE terminates the CAP (S232). Otherwise (N), step 2 proceeds.

Step 5) (S260) The UE senses the channel until either a busy sensing slot is detected within an additional defer duration $T_d$ or all the slots of the additional defer duration $T_d$ are detected to be idle.

Step 6) (S270) If the channel is sensed to be idle for all the slot durations of the additional defer duration $T_d$ (Y), step 4 proceeds. Otherwise (N), step 5 proceeds.

Table 12 shows that $m_p$, a minimum CW, a maximum CW, a maximum channel occupancy time (MCOT), and an allowed CW size, which are applied to the CAP, vary depending on channel access priority classes.

[Table 12]

| Channel Access Priority Class (p) | $m_p$ | $CW_{min, p}$ | $CW_{max, p}$ | $T_{ulmcot,p}$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 12, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration Ta is configured in the following order: duration Tf (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on an explicit/implicit reception response for a previous UL burst (e.g., PUSCH) (CW size update). For example, $CW_p$ may be initialized to $CW_{min,p}$ based on the explicit/implicit reception response for the previous UL burst. Alternatively, $CW_p$ may be increased to the next higher allowed value or maintained as it is.

(2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration $T_{short\_dl}$ = 25 us. Herein, $T_{short\_dl}$ includes the duration Tf (=16 us) and one sensing slot duration immediately after the duration Tf. In the type 2A UL CAP, Tf includes a sensing slot at the beginning thereof. In the type 2B UL CAP, the UE may perform transmission immediately after the channel is sensed to be idle for the sensing duration Tf = 16 us. In the type 2B UL CAP, Tf includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, $m_p$, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time $T_d$ ($T_d = T_f + m_p * T_{sl}$), the UE may attempt to transmit data by occupying the channel. For example, $T_{sl}$ (= 9 usec) is a basic sensing unit or sensing slots, and may include a measurement duration for at least 4 usec. For example, the front 9 usec of Tf (= 16 usec) may be configured to be $T_{sl}$.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

In this specification, the word "configuration or definition" may be interpreted as being (pre-)configured by a base station or network (via pre-defined signaling (e.g., SIB, MAC signaling, RRC signaling)). For example, "A may be configured" may include "a base station or network (pre-)configures/defines or informs a UE of A". Alternatively, the word "configuration or definition" may be interpreted as being pre-configured or pre-defined by the system. For example, "A may be configured" may include "A is pre-configured/defined by the system".

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in an unlicensed band, in order to simplify the channel sensing, it may be informed through the channel occupancy time (COT) duration information that it occupies the channel obtained through the initial general channel sensing for a certain period of time, and the maximum value of the length of the COT duration may be set differently according to the priority value of a service or a data packet.

Meanwhile, the sidelink transmission in the unlicensed band may be in the form of transmission through a plurality of RBs spaced apart according to a specification. For uplink channel transmission in the unlicensed band, a UE may be provided by a base station with information about a single or multiple RB set(s) and a single or multiple interlaces, and the final transmission resource may be determined as the intersection of the RBs within the provided RB set(s) and the RBs corresponding to the provided interlaces.

Meanwhile, an interlace may be defined in a common RB (CRB) grid, wherein an interlace in the CRB grid may be determined as an RB set spaced 10 RBs apart at 15 kHz and an RB set spaced 5 RBs apart at 30 kHz, and the interlace index of each interlace may be determined based on the RB offset relative to CRB #0.

On the other hand, in the case of sidelink communication, sensing and/or resource (re)selection is performed in sub-channel units, which may require that the sub-channels be represented in the form of interlaced and/or RB sets. The advantage of this is that subchannel-based sensing operations and/or resource reservation methods may be reused as much as possible.

On the other hand, sidelink synchronization signals in the license band or ITS band are generated based on sequences of length 127, but in the case of interlaced structures, depending on the size of the RBs that comprises the RB set, there may be insufficient resources to map the traditional 127-long sequence as it is.

For example, in an unlicensed band, sidelink communications may be limited to cases where the synchronization source is GNSS. For example, sidelink communications in unlicensed bands may be limited to cases where the synchronization source is a base station (e.g., eNB or gNB).

For example, if the synchronization source is a base station, a UE may receive a synchronization signal transmitted by the base station for a licensed band and use it to derive slot boundaries for sidelink communications in an unlicensed band. For example, if the synchronization source is a base station, a UE may receive a synchronization signal transmitted by a base station for the unlicensed band to which the UE is to perform sidelink, and use it to derive slot boundaries for sidelink communications in the unlicensed band.

For example, in using the synchronization signal transmitted by a base station in the unlicensed band as described above, the base station may be a base station that corresponds to the target PLMN ID of a UE. For example, in using the synchronization signal transmitted by a base station in the unlicensed band, the base station may not correspond to the target PLMN ID of a UE, but the RSRP measurement based on the synchronization signal and/or PBCH DMRS transmitted by the base station may be greater than or equal to a specific level at the UE. The advantage of this may be that there may be no need for sidelink SSB transmissions and receptions on unlicensed bands. However, the circumstances under which sidelink communications may be performed may be limited.

For example, when transmitting a sidelink synchronization signal through a specific interlace within a specific RB set, a UE may map to an RE of 10 RBs by cutting 7 bits of the MSB and/or 7 bits of the LSB of a 127 long synchronization sequence. For example, when transmitting a sidelink synchronization signal through a specific interlace within a specific RB set, a UE may map to an RE of 9 RBs by cutting 19 bits of the MSB and/or 19 bits of the LSB of the 127-long synchronization sequence. For example, in the above, the UE may additionally cut X bits of MSBs and/or X bits of LSBs to secure a guard region. This may be useful in terms of power spectral density (PSD) boosting. For example, the value of X may be a value less than 10, such as 5 or 6, etc.

For example, when transmitting a sidelink synchronization signal through a specific interlace within a specific RB set, 1 RB to which a synchronization sequence of length 127 is mapped may be transmitted through 11 PRBs distributed within the RB set. For example, the spacing between the PRBs and/or the PRB positions at which the mapping of the 11 RBs is to start may be (pre-)configured per RB set and/or per SL BWP and/or per SL carrier and/or per subcarrier spacing (SCS). For example, the spacing between the PRBs may be positioned such that the 11 RBs in the RB set are (approximately) equally distributed. For example, the PRB spacing may be an integer value via rounding down for N/11 and/or an integer value via rounding for N/11, when the number of PRBs constituting the RB set is N. For example, when 11 RBs for the synchronization signal map to 11 non-contiguous PRBs in the RB set, the position of the starting PRB may be determined such that the synchronization signal is centered in the RB set. For example, when the 11 RBs for the synchronization signal map to 11 non-contiguous PRBs within the RB set, the starting PRB may be the first PRB in the RB set. For example, when the 11 RBs for the synchronization signal map to 11 non-contiguous PRBs in the RB set, the last PRB may be the last PRB of the RB set.

In embodiments of the present disclosure, the positions of the non-contiguous 11 PRBs may be determined differently depending on the location of the RB set and/or the location of the guard region.

For example, when transmitting a sidelink synchronization signal through a specific interlace within a specific RB set, the synchronization signal may be generated based on an M sequence of length 113. For example, the offset value for some component of the SL ID for the S-PSS sequence index may be changed to 37 or 38. For example, the 37 or 38 may be an approximation to a value for a third of the sequence length 113. For example, the fixed offset value for the S-PSS sequence index may be 18 or 19. Equation 1 is a representation of the above embodiment of generating an S-PSS sequence.

[Equation 1]

$$N_{\text{ID}}^{\text{SL}} = N_{\text{ID},1}^{\text{SL}} + 336 N_{\text{ID},2}^{\text{SL}}$$

$$d_{\text{S-PSS}}(n) = 1 - 2x(m)$$

$$m = \left(n + A + B * N_{ID,2}^{\text{SL}}\right) \bmod 113$$

$$0 \leq n < 113$$

where

$$x(i + 7) = \left(x(i + 4) + x(i)\right) \bmod 2$$

$A$ = 18 *or* 19
$B$ = 37 *or* 38

and

$$[x(6) \quad x(5) \quad x(4) \quad x(3) \quad x(2) \quad x(1) \quad x(0)] = [1 \quad 1 \quad 1 \quad 0 \quad 1 \quad 1 \quad 0]$$

Equation 2 is a representation of the above embodiment for generating an S-SSS sequence.

[Equation 2]

$$d_{\text{S-SSS}}(n) = \left[1 - 2x_0\left((n + m_0) \bmod 113\right)\right]\left[1 - 2x_1\left((n + m_1) \bmod 113\right)\right]$$

$$m_0 = 15 \left\lfloor \frac{N_{\text{ID},1}^{\text{SL}}}{112} \right\rfloor + 5 N_{\text{ID},2}^{\text{SL}}$$

$$m_1 = N_{\text{ID},1}^{\text{SL}} \bmod 112$$

$$0 \leq n < 113$$

where

$$x_0(i + 7) = \left(x_0(i + 4) + x_0(i)\right) \bmod 2$$

$$x_1(i + 7) = \left(x_1(i + 1) + x_1(i)\right) \bmod 2$$

and

$$[x_0(6) \quad x_0(5) \quad x_0(4) \quad x_0(3) \quad x_0(2) \quad x_0(1) \quad x_0(0)] = [0 \quad 0 \quad 0 \quad 0 \quad 0 \quad 0 \quad 1]$$

$$[x_1(6) \quad x_1(5) \quad x_1(4) \quad x_1(3) \quad x_1(2) \quad x_1(1) \quad x_1(0)] = [0 \quad 0 \quad 0 \quad 0 \quad 0 \quad 0 \quad 1]$$

In embodiments of the present disclosure, specific RB set and/or specific interlace may be (pre-)configured and/or predetermined per SL BWP and/or per resource pool, or may be selected by a UE, but information about the RB set and/or interlace may be indicated via PSBCH (e.g., embedded in content or indicated by PSBCH DMRS). For example, as described above, RB set and/or interlace candidates that can be indicated via PSBCH may be (pre-)configured.

On the other hand, as a way to satisfy the occupied channel bandwidth (OCB) requirement, increasing the number of RBs to which S-SSBs are mapped is proposed.

Equation 3 represents the above embodiment of generating an S-PSS sequence.

[Equation 3]

$$N_{\mathrm{ID}}^{\mathrm{SL}} = N_{\mathrm{ID},1}^{\mathrm{SL}} + 336 N_{\mathrm{ID},2}^{\mathrm{SL}}$$

$$d_{\mathrm{S\text{-}PSS}}(n) = 1 - 2x(m)$$

$$m = \left(n + \mathrm{A} + \mathrm{B} * N_{ID,2}^{\mathrm{SL}}\right) \bmod \mathrm{C}$$

$$0 \le n < \mathrm{C}$$

where

$$x(i+7) = \left(x(i+4) + x(i)\right) \bmod 2$$

and

$$[x(6) \quad x(5) \quad x(4) \quad x(3) \quad x(2) \quad x(1) \quad x(0)] = [1 \quad 1 \quad 1 \quad 0 \quad 1 \quad 1 \quad 0]$$

Equation 4 represents the above embodiment of generating an S-SSS sequence.

[Equation 4]

$$d_{\mathrm{S\text{-}SSS}}(n) = \left[1 - 2x_0\left((n + m_0) \bmod \mathrm{C}\right)\right]\left[1 - 2x_1\left((n + m_1) \bmod \mathrm{C}\right)\right]$$

$$m_0 = 15 \left\lfloor \frac{N_{\mathrm{ID},1}^{\mathrm{SL}}}{112} \right\rfloor + 5 N_{\mathrm{ID},2}^{\mathrm{SL}}$$

$$m_1 = N_{\mathrm{ID},1}^{\mathrm{SL}} \bmod 112$$

$$0 \le n < \mathrm{C}$$

where

$$x_0(i+7) = \left(x_0(i+4) + x_0(i)\right) \bmod 2$$

$$x_1(i + 7) = \big(x_1(i + 1) + x_1(i)\big) \bmod 2$$

and

$$[x_0(6) \quad x_0(5) \quad x_0(4) \quad x_0(3) \quad x_0(2) \quad x_0(1) \quad x_0(0)] = [0 \quad 0 \quad 0 \quad 0 \quad 0 \quad 0 \quad 1]$$

$$[x_1(6) \quad x_1(5) \quad x_1(4) \quad x_1(3) \quad x_1(2) \quad x_1(1) \quad x_1(0)] = [0 \quad 0 \quad 0 \quad 0 \quad 0 \quad 0 \quad 1]$$

For example, the number of RBs for S-SSB for 15 kHz subcarrier spacing (SCS) may be 88 or 96. For example, the sequence length of the S-PSS and/or S-SSS in the above may be 1051 or 1151. For example, in generating the S-PSS for the 15 kHz SCS above, the value of C in Equation 3 may be 1051 or 1151, and/or the value of B may be 350 or 351 or 383 or 384, and/or the value of A may be 116 or 117 or 127 or 128. For example, the value of A may be 175 or 176 or 175 or 176.

For example, an S-PSS and/or S-SSS sequence may be mapped to include the lowest subcarrier of the S-SSB, or it may be mapped to include the highest subcarrier, or it may be mapped to be centered on the frequency region of the S-SSB. For example, depending on the mapping position of the S-SSB within the RB set, a guard region for the sequence may be placed on the side closer to the RB set boundary.

For example, the number of RBs for S-SSB for 30 kHz subcarrier spacing (SCS) may be 44 or 48. For example, the sequence length of the S-PSS and/or S-SSS in the above may be 523 or 571. For example, in generating the S-PSS for the 30 kHz SCS above, the value of C in Equation 3 may be 523 or 571, and/or the value of B may be 174 or 175 or 190 or 191, and/or the value of A may be 58 or 59 or 63 or 64. For example, the value of A may be 87 or 88 or 95 or 96.

For example, the S-PSS and/or S-SSS sequence may be mapped in a form where the lowest subcarrier of the S-SSB is included, or mapped in a form where the highest subcarrier is included, or mapped in the center of the frequency region of the S-SSB. For example, depending on the mapping position of the S-SSB within the RB set, the guard region for the sequence may be placed on the side closer to the RB set boundary. For example, in 30 kHz SCS, the length of the sequence may be determined to be 577, but the first or last symbol of the sequence may be punctured to fit the length of 48 RBs. For example, in the above case, the value of A could be 192 or 193, and the value of B could be 64 or 65.

For example, the number of RBs for S-SSB for 60 kHz subcarrier spacing (SCS) may be 22 or 24. For example, the sequence length of the S-PSS and/or S-SSS in the above may be 263 or 283. For example, in generating the S-PSS for the 60 kHz SCS above, the value of C in Equation 3 may be 263 or 283, and/or the value of B may be 87 or 88 or 94 or 95, and/or the value of A may be 29 or 30 or 31 or 32. For example, the value of A may be 43 or 44 or 47 or 48.

For example, the S-PSS and/or S-SSS sequence may be mapped in a form where the lowest subcarrier of the S-SSB is included, or mapped in a form where the highest subcarrier is included, or mapped in the center of the frequency region of the S-SSB. For example, depending on the mapping position of the S-SSB within the RB set, a guard region for the sequence may be placed on the side closer to the RB set boundary.

For example, the value of B can be a rounding down value, a rounding up value, or a rounding value for the length of the sequence divided by 3. For example, the value of A can be a rounding down value, a rounding up value, or a rounding value for the length of the sequence divided by 6. For example, the value of A can be a rounding down value, a rounding up value, or a rounding value for the value of B divided by 2.

For example, for 120 kHz subcarrier spacing (SCS), the number of RBs for S-SSB can be 11, in this case the S-SSB structure in the licensed band can be used as it is.

Meanwhile, as a method to satisfy the occupied channel bandwidth (OCB) requirement, it is proposed to repeat the S-SSB consisting of 11 RBs in terms of frequency. However, the above method may have a problem that the coverage of the SL communication may be limited due to the higher PAPR for the S-SSB transmission. For example, the S-SSBs repeated in the frequency region may be mapped to contiguous consecutive RBs and/or REs.

For example, the S-PSS and/or S-SSS mapping may be in the form of concatenating a plurality of sequences without guard regions and mapping the concatenated sequences to the center or low frequency region or high frequency region of an RB set to which a plurality of S-SSB repeats are mapped.

For example, the frequency region position to which the concatenated sequence is mapped may vary depending on the position of the S-SSB repeats in the RB set. For example, if the position of the S-SSB repeats in the RB set is close to the boundary of the RB set, the concatenated sequence may be mapped to be as far away from the boundary of the RB set as possible. For example, as a method for lowering the PAPR as described above, all or a portion of the S-PSS and/or S-SSS and/or PSBCH symbols may be multiplied by different scaling values per S-SSB repeat or per sequence repeat for all or a portion of the S-PSS and/or S-SSS and/or PSBCH symbols. For example, a single PSBCH may be mapped through rate-matching based on the number of total REs for the PSBCH for the S-SSB resources repeated above.

On the other hand, the OCB requirement may be temporarily omitted within the channel occupancy time (COT) interval. For example, a UE may perform channel access according to the channel access procedure for S-SSB, and for all or part of the symbols in the PSBCH, the UE may use an interlace structure and/or perform wideband transmission occupying more than 80% of the channel, subject to OCB requirements, and/or S-PSS and/or S-SSS may be transmitted based on 11 consecutive PRBs.

For example, in the above, at least the first symbol of the PSBCH or the first symbol of the S-SSB may be transmitted in a form that satisfies the OCB requirements. For example, in an unlicensed band and/or on a carrier with OCB requirements, the position of the S-PSS and/or S-SSS symbols may be changed to the end of the S-SSB. This may be because the first symbol of the S-SSB is a PSBCH, and if a UE has succeeded in the channel access for the PSBCH, the symbols to which the subsequent S-PSS and S-SSS will be transmitted are already in the COT duration.

Where, for a single S-SSB transmission, in a specific symbol, a transmission is performed with a transmission structure that complies with the OCB requirements (e.g., a wideband transmission that occupies 80% or more of the channel) and/or in a specific symbol, a transmission is performed with a transmission structure that omits the OCB requirements (e.g., a narrowband transmission that does not occupy 80% of the channel and/or occupies 2 MHz or more), a transient period may be required between the different transmission structures.

More specifically, a transient interval may be required when the frequency domain changes between transmissions and/or when the PSD changes, which can lead to signal distortion, resulting in poor detection performance for S-SSB.

For example, if a UE transmits PSBCH in a first transmission structure with OCB requirements, and/or transmits S-PSS and/or S-SSS and/or residual PSBCH in a second transmission structure that omits the OCB requirements, the transitional period may be designated within the PSBCH symbol region of the first transmission structure.

For example, if a UE transmits S-PSS and/or S-SSS in a second transmission structure that omits OCB requirements, and/or transmits a PSBCH in a first transmission structure with OCB requirements, then a transient period may be designated within the PSBCH symbol region of the first transmission structure.

For example, if a UE transmits a PSBCH in a first transmission structure according to the OCB requirements, and/or transmits S-PSS and/or S-SSS and/or residual PSBCH in a second transmission structure that omits the OCB requirements, the UE may organize the symbol structure of the S-SSB in the form of PSBCH/PSBCH/S-PSS/S-PSS/S-SSS/S-SSS/PSBCH/....

For example, if a UE transmits a PSBCH in a first transmission structure with OCB requirements, and/or transmits S-PSS and/or S-SSS and/or residual PSBCH in a second transmission structure that omits OCB requirements, the UE may add one more S-PSS and/or S-SSS symbol to the S-SSB structure. For example, in the above, the S-SSB structure may be in the form of PSBCH/S-PSS/S-PSS/S-PSS/S-SSS/S-SSS/PSBCH/....

For example, when a UE transmits a PSBCH in a first transmission structure according to the OCB requirements, and/or transmits S-PSS and/or S-SSS and/or residual PSBCH in a second transmission structure that omits the OCB requirements, the UE may map the S-PSS and/or S-SSS for all or part of the S-PSS and/or S-SSS symbols to the frequency region in the form of a COMB structure in RE units. For example, the COMB structure may be mapping the S-PSS and/or S-SSS to REs with an even index or an odd index, or it may be mapping the S-PSS and/or S-SSS to REs with an index that is derived by dividing the RE index by a predefined or (pre)configured COMB STEP and adding the remaining value to a zero or (pre)configured value. As an advantage to the above, as the actual synchronization reference signal is repeated on the time axis due to the COMB structure, some of the time repetitions may be used as transient periods and/or a minimum frequency occupancy region of 2 MHz may be obtained on the frequency region.

On the other hand, a UE may omit or simplify the channel sensing operation for a specific transmission, wherein the specific transmission may be one in which limit 1) the number of transmissions within 50 msec is 50 or less, and limit 2) the total length of transmission interval within 50 msec is 2,500 usec or less. For example, a UE may expect that when transmitting S-SSB, the above limits 1 and/or 2 are (pre)configured to be met for the S-SSB time resource. For example, a UE may expect that the limit 1 and/or limit 2 is (pre)configured to be met for the entire S-SSB time resource. For example, sl-TimeInterval and/or sl-NumSSB-WithinPeriod and/or sl-SSB-TimeAllocation1 and/or sl-SSB-TimeAllocation2 and/or sl-SSB-TimeAllocation3 may be suitably (pre)configured such that limits 1 and 2 are met.

For example, the specific transmission for simplifying the sensing operation may be whose 3) DUTY CYCLE is at most 1/20. For example, the specific transmission may be such that the total percentage of active interval within a given period is no more than 1/20.

For example, sl-TimeInterval and/or sl-NumSSB-WithinPeriod and/or sl-SSB-TimeAllocation1 and/or sl-SSB-TimeAllocation2 and/or sl-SSB-TimeAllocation3 may be suitably (pre)configured such that limit 3 is met.

On the other hand, a UE may simplify the above sensing operation and apply it to S-SSB transmissions and/or PSFCH transmissions at the same time, and in this case, the UE may simplify the channel sensing operation only if the above simplification conditions are satisfied for both transmissions.

On the other hand, if the above simplification conditions are not satisfied for S-SSB transmissions and/or PSFCH transmissions, it may be necessary to cancel applying the simplified channel sensing operation for all or part of the transmissions. For example, if a UE determines that condition 1) and/or condition 2) and/or condition 3) above are not satisfied for S-SSB transmissions and/or PSFCH transmissions, the UE may preferentially cancel applying the simplified channel sensing operation for all or part of the PSFCH transmissions (enough to satisfy the above conditions), and/or perform channel sensing operation based on Type 1 channel access for the PSFCH transmission (if the PSFCH is outside the COT), and/or the UE may cancel the PSFCH transmission.

For example, if a UE determines that condition 1) and/or condition 2) and/or condition 3) is not satisfied for an S-SSB transmission and/or PSFCH transmission, the UE may preferentially cancel applying simplified channel sensing operation for the S-SSB transmission, and/or perform channel sensing operation based on Type 1 channel access for the S-SSB transmission (if the S-SSB is outside the COT), and/or cancel the S-SSB transmission. For example, the canceling of the S-SSB transmission may be limited to cases where the S-SSB transmission originates from additional S-SSB transmission resources (for the purpose of compensating for LBT failure).

For example, if the UE determines that condition 1) and/or condition 2) and/or condition 3) above are not satisfied for the S-SSB transmission and/or PSFCH transmission, and/or if it cancels applying the simplified channel sensing operation for the entire PSFCH transmission or the entire S-SSB transmission, the UE may further cancel applying the simplified channel sensing operation for all or part of the S-SSB transmission or PSFCH transmission, and/or perform channel sensing operation based on the Type 1 channel access procedure for all or part of the S-SSB transmission or PSFCH transmission, and/or the UE may cancel the transmission for all or part of the S-SSB transmission or PSFCH transmission.

For example, if a UE determines that the above conditions 1) and/or conditions 2) and/or conditions 3) are not satisfied for an S-SSB transmission and/or a PSFCH transmission, the UE may cancel applying the simplified channel sensing operation for all or part of the S-SSB transmission and/or the PSFCH transmission. For example, the channels and/or transmissions for which the application of the simplified channel sensing operation is to be canceled may be selected by the UE implementation, and/or may correspond to resources that are temporally earlier, and/or may correspond to resources that are temporally later.

For example, the maximum number of S-SSB time resources in an S-SSB period at 15 kHz SCS may be a value of 6 or less. For example, the above may be a value determined in a situation where the UE's transmission criteria satisfies limit 1 and/or limit 2 above. For example, in 15 kHz SCS, the maximum number of S-SSB time resources in an S-SSB period may be a value of 2 or less. For example, the above may be a value determined in a situation where the S-SSB transmission resource criteria satisfy limit 1 and/or limit 2 above. For example, the above may be the case where the sl-SSB-TimeAllocation3 is (pre)configured. For example, the maximum number of S-SSB time resources in an S-SSB period at 15 kHz SCS may be a value of 3 or less if sl-SSB-TimeAllocation3 is not configured.

For example, the maximum number of S-SSB time resources in an S-SSB period in 15 kHz SCS may be a value of 8 or less. For example, the above may be a value determined in a situation where the UE's transmission criteria satisfies limit 3 above. For example, the maximum number of S-SSB time resources in an S-SSB period at 15 kHz SCS may be a value of 2 or 3 or less. For example, the above may be a value determined in a situation where the S-SSB transmission resource criteria satisfies limit 3 above. For example, the above may be the case where sl-SSB-TimeAllocation3 is (pre) configured. For example, the maximum number of S-SSB time resources in an S-SSB period at 15 kHz SCS may be 4 or less if sl-SSB-TimeAllocation3 is not configured.

For example, in 30 kHz SCS, the maximum number of S-SSB time resources in an S-SSB period may be a value of 16 or less. For example, the above may be a value determined in a situation where the UE's transmission criteria satisfies limit 1 and/or limit 2 and/or limit 3 above. For example, in 15 kHz SCS, the maximum number of S-SSB time resources in an S-SSB period may be a value of 5 or 6 or less, wherein sl-SSB-TimeAllocation1 and/or sl-SSB-TimeAllocation2 and/or sl-SSB-TimeAllocation3 may have different maximum values. For example, the above may be values determined in a situation where the above limit 1 and/or limit 2 and/or limit 3 are satisfied on an S-SSB transmission resource basis. For example, the above may be the case where the sl-SSB-TimeAllocation3 is (pre)configured. For example, the maximum number of S-SSB time resources in an S-SSB period at 30 kHz SCS may be a value of 8 or less if sl-SSB-TimeAllocation3 is not configured.

For example, in 60 kHz SCS, the maximum number of S-SSB time resources in an S-SSB period may be a value of 32 or less. For example, the above may be a value determined in a situation where the UE's transmission criteria satisfies limit 1 and/or limit 2 and/or limit 3 above. For example, in 15 kHz SCS, the maximum number of S-SSB time resources in an S-SSB period may be a value of 10 or 11 or less, wherein sl-SSB-TimeAllocation1 and/or sl-SSB-TimeAllocation2 and/or sl-SSB-TimeAllocation3 may have different maximum values. For example, the above may be values determined in a situation where the above limit 1 and/or limit 2 and/or limit 3 are satisfied on an S-SSB transmission resource basis. For example, the above may be the case where the sl-SSB-TimeAllocation3 is (pre)configured. For example, in 60 kHz SCS, the maximum number of S-SSB time resources in an S-SSB period may be 16 or less if sl-SSB-TimeAllocation3 is not configured.

For example, sl-SSB-TimeAllocation1 and/or sl-SSB-TimeAllocation2 and/or sl-SSB-TimeAllocation3 may overlap in time domain, in whole or in part. For example, sl-SSB-TimeAllocation3 may be the same as sl-SSB-Time-Allocation1, but the frequency resource area for S-SSBs may be different. For example, if a UE relays S-SSB transmitted in the time resource and/or frequency resource for sl-SSB-TimeAllocation3, it may relay S-SSB transmissions in the time domain of sl-SSB-TimeAllocation2 in the frequency domain corresponding to sl-SSB-TimeAllocation1 or in the frequency domain corresponding to sl-SSB-TimeAllocation3.

For example, if a UE fails in channel access for an S-SSB transmission, it may attempt to transmit by trying to channel access the next RB set containing S-SSB resources.

For example, a sidelink synchronization signal may be transmitted through all or some of the RBs corresponding to a plurality of interlaces within a single or a plurality of RB sets.

For example, the sequence length of the synchronization signals may remain 127, and the synchronization signals may be mapped to only some of the 127 REs for the RB, with the remaining REs being guard regions. For example, the locations of the guard regions may be located in a lower region and/or a higher region in terms of frequency. For example, for RBs corresponding to two interlaces in a specific RB set, a guard region may be configured for 57 or 56 REs from the lower region on the frequency region, and a guard region may be configured for 56 or 57 REs from the higher region on the frequency region, with a synchronization signal of 127 lengths mapped to the center of the frequency region.

For example, the sequence length of the synchronization signal may be 229 or 233 or 239, wherein the synchronization signal is mapped only to REs of a portion of the sequence length for the RB, and the remaining REs may be guard regions. For example, the locations of the guard regions may be located in a lower region and/or a higher region in terms of frequency. For example, the synchronization signal may be mapped to the center frequency region for the RBs and REs, and the guard regions may be mapped to the lower and higher regions of the frequency region, respectively, but the difference in the number of REs comprising the guard in the lower and higher regions may be zero or one.

For example, if the length of the sequence is 229, the offset value for some components of the SL ID for the S-PSS sequence index may change to 76 or 77, and the fixed offset value may be 37 or 38 or 39.

For example, if the length of the sequence is 233, the offset value for some components of the SL ID for the S-PSS sequence index may change to 77 or 78, and the fixed offset value may be 37 or 38 or 39.

For example, if the length of the sequence is 239, the offset value for some components of the SL ID for the S-PSS sequence index may change to 79 or 80, and the fixed offset value may be 38 or 39 or 40.

In embodiments of the present disclosure, specific RB set group and/or specific interlace group may be (pre-)configured per SL BWP and/or per resource pool, or may be predetermined or selected by a UE, but information about the RB set group and/or interlace group may be indicated via PSBCH (e.g., embedded in content or indicated by PSBCH DMRS).

In embodiments of the present disclosure, depending on the sequence seed value and/or SL ID value and/or index shift value, the RB set group and/or interlace group used for the synchronization signal may be different. This may be due to the fact that the suitable RB set-interlace group combination in terms of PAPR may be different. For example, the unit in which the RB set group and/or interlace group is configured or indicated may be in the form of a plurality of RB set indices and/or a plurality of interlace indices. For example, the RB offset or index difference between the RB sets comprising the RB set group may be (pre-)configured or predefined, and the index of the lowest RB set may be indicated or configured.

For example, the RB offset or index difference between interlaces comprising an interlace group may be (pre-)configured or predefined. For example, the index of the interlace with the lowest frequency or the interlace with the lowest index may be indicated or configured. For example, an RB set group and/or an interlace group candidate that may be indicated via PSBCH as described above may be (pre-)configured.

For example, an RB set group and/or interlace group to which the synchronization signal and/or PSBCH is mapped and/or transmitted may be different for each period of the S-SSB and/or each repetition within a period of the S-SSB. For example, frequency hopping may be applied to an RB set group and/or interlace group to which the synchronization signal and/or PSBCH is mapped and/or transmitted, depending on an index value for a period of the S-SSB and/or an index value for a repetition within a period of the S-SSB. For example, a plurality of RB sets for the mapping of the synchronization signals and/or PSBCH may be configured, wherein a UE may transmit a synchronization signal and/or PSBCH through the lowest or highest indexed RB set among the RB sets that are IDLE according to the channel sensing results. For example, a UE may select a resource to transmit only among the RB sets where the synchronization signals and/or PSBCHs are (pre-)configured to be allowed to be transmitted.

For example, if there is no guard region between RB sets, a UE may perform SL transmission only if the channel sensing result is IDLE for all RB sets.

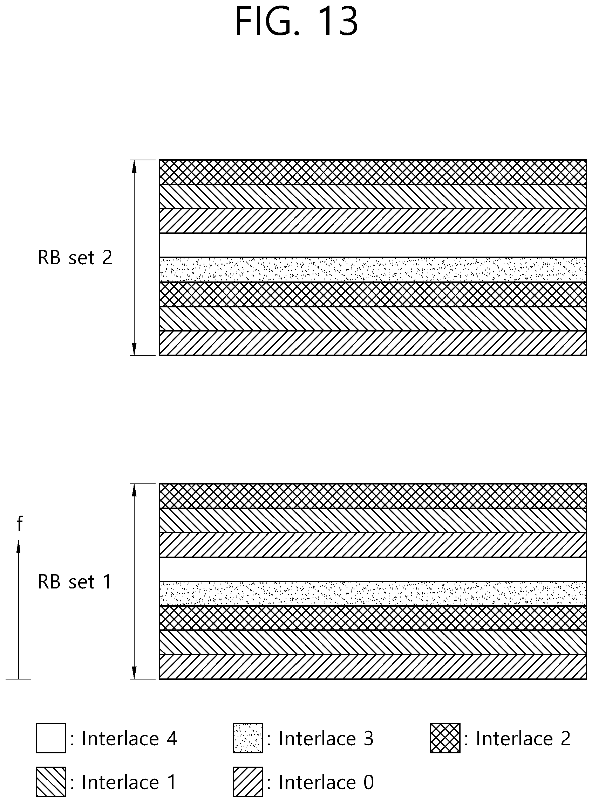

FIG. 13 shows a structure of a plurality of RB sets through which an S-SSB is transmitted, according to one embodiment of the present disclosure. The embodiment of FIG. 13 may be combined with various embodiments of the present disclosure.

Referring to FIG. 13, two RB sets are shown. According to an embodiment of the present disclosure, S-SSB may be transmitted based on at least one RB set. Here, each RB set may be structured in such a way that a specific number of interlaces are repeated according to frequency. For example, the index of the first interlace of RB set 1 and RB set 2 in FIG. 13 may be zero, and the index of the first interlace of each RB set may be the same in the at least one RB set.

For example, interlaces with the same interlace index may be mapped to the same subchannel. For example, interlace 0 of RB set 1 and interlace 0 of RB set 2 in FIG. 13 may belong to different RB sets, but may be mapped to the same subchannel. According to one embodiment of the present disclosure, S-SSB may be transmitted based on RB set 1 and RB set 2 shown in FIG. 13.

For example, by transmitting an S-SSB based on at least one RB set as described above, the effect of improving the probability of successful transmission of the S-SSB may occur even if channel sensing (e.g., LBT operation) fails (e.g., if the result is BUSY). Further, if a receiving UE detects an S-SSB in a specific RB set, it may have the effect that the starting position of the SL BWP may be accurately determined based on the RB set in which the S-SSB is detected.

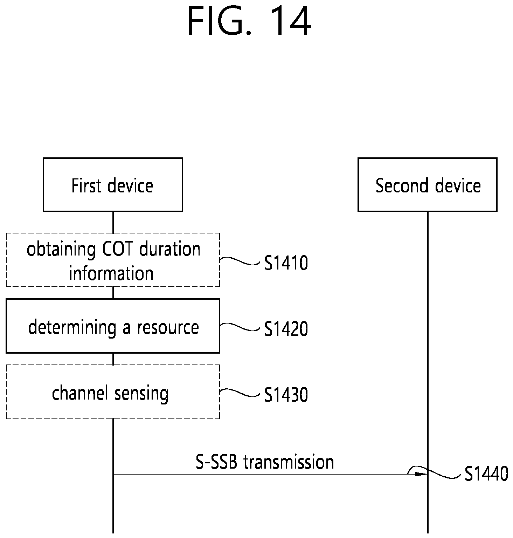

FIG. 14 shows a procedure for a first device to transmit an S-SSB to a second device, according to one embodiment of the present disclosure. The embodiment of FIG. 14 may be combined with various embodiments of the present disclosure.

Referring to FIG. 14, in step S1410, a first device may obtain information related to a COT duration. For example, the step S1410 may be a step performed only if the first device is performing communication based on a Type 2 LBT. In step S1420, the first device may determine a resource for transmitting an S-SSB. For example, the resource may be included in at least one RB set.

In step S1430, the first device may perform channel sensing from a time point preceding the starting time point of the resource by a specific time interval, to the start time point. For example, the step S1430 may be a step performed only if the first device is performing communication based on a Type 2 LBT. For example, the channel sensing may comprise LBT operation.

For example, the embodiment of FIG. 14 assumes that the result of the channel sensing is 'IDLE'. In step S1440, the first device may transmit an S-SSB based on the resource. For example, the first device may transmit an S-SSB to the second device based on the resource. For example, the S-SSB may be transmitted based on the at least one RB set. For example, the first device may transmit the S-SSB together with information about the at least one RB set.

For example, by transmitting an S-SSB based on at least one RB set as described above, the effect of improving the probability of successful transmission of the S-SSB may occur even if channel sensing (e.g., LBT operation) fails (e.g., if the result is BUSY). Further, if a receiving UE detects an S-SSB in a specific RB set, it may have the effect that the starting position of the SL BWP may be accurately determined based on the RB set in which the S-SSB is detected.

On the other hand, when the PRIMARY synchronization signal and the SECONDARY synchronization signal are transmitted in an interlaced manner, the actual transmission power may differ significantly due to the difference in MPR (maximum power reduction), etc., in this case, if PRIMARY synchronization signal and SECONDARY synchronization signal are mapped to adjacent symbols, a transitional period between the transmissions may be required, or the detection performance of the synchronization signal may be significantly reduced due to signal distortion during the transitional period.

For example, depending on whether the sidelink synchronization signals and channel transmissions are mapped to non-contiguous RBs in an interlaced manner or to contiguous RBs, the symbols to which the PRIMARY synchronization signal and/or SECONDARY synchronization signal and/or PSBCH are mapped may be different.

For example, when interlaced transmission is configured for a sidelink synchronization signal, the PRIMARY and SECONDARY synchronization signals may not be mapped to adjacent symbols, but may be mapped such that a specific time interval is maintained between them. For example, the specific time interval may be 1 or 2 symbols, and a UE may map/transmit PSBCH in the specific time interval. For example, the specific time interval may be 1 or 2 symbols, and a UE may map/transmit a PRIMARY synchronization signal and/or a SECONDARY synchronization signal in the specific time interval.

Meanwhile, in future systems, sidelink synchronization may be configured on a per-UE pair basis rather than configured in a cluster form for multiple UEs. For example, after a UE receives a sidelink synchronization signal and/or channel, it may not transmit information about it back to another UE. In other words, only between a UE that transmitted the sidelink synchronization signal/channel and a UE that received it, synchronization and data exchange may occur, and thus a receiving UE may omit the operation of transmitting the sidelink synchronization signal/channel.

For example, when a UE receives a sidelink synchronization signal and/or channel from another UE, the UE may be provided with a target SL ID (list) for matching as a synchronization source and/or similar information from a higher layer of the UE. For example, the manner in which the UE transmits the sidelink synchronization signals and/or channels may be different depending on the type of service and/or source ID and/or destination ID (list), etc. that the UE expects to transmit and/or receive.

For example, the transmission method being different may be an SL ID configuration being different and/or information about the different transmission method may be provided via a PSBCH. This allows a UE receiving a sidelink synchronization signal/channel to decide whether to synchronize to the synchronization signal according to the information indicated in the SL ID and/or PSBCH.

For example, a UE that has received a sidelink synchronization signal and/or channel and/or synchronized based on the synchronization signal/channel may transmit a response signal and/or channel back to the UE that transmitted the sidelink synchronization signal and/or PSBCH. For example, the response signal and/or channel may be determined based on the information provided in the SL ID and/or PSBCH used to generate the sidelink synchronization signal and/or channel.

For example, the response signal may be in the form of PSCCH/PSSCH and/or the source ID and/or the destination ID may be set to the SL ID and/or the ID provided in the PSBCH. For example, a UE that transmits a sidelink synchronization signal and/or channel may omit or stop transmitting the sidelink synchronization signal and/or channel when it determines that another UE has synchronized based on the synchronization signal/channel and/or when it receives a response signal for the sidelink synchronization signal/channel.

For example, the UE may transmit again the sidelink signal and/or channel if it has not received the sidelink signal and/or channel from the same synchronization UE for a certain period of time (e.g., by (re)starting the timer from the stop of the synchronization signal/channel) and/or if it has received a synchronization signal/channel resume transmission indicator from the UE.

On the other hand, S-SSB transmission through an interlace structure and/or non-contiguous RBs may or may not be supported depending on the capability of a UE. For example, if a UE does not have the UE capability for S-SSB transmission through an interlace structure and/or non-contiguous RBs, the UE may not perform SL operation on the SL carrier and/or SL BWP through which the S-SSB is transmitted. For example, if a UE does not have the UE capability for S-SSB transmission through an interlace structure and/or non-contiguous RBs, the UE may not select another UE as a synchronization source.

For example, in the above, a UE may select GNSS or eNB or gNB or base station as a synchronization source. For example, if a UE does not have a UE capability for S-SSB transmission through an interlace structure and/or non-contiguous RBs, the UE may omit the operation of relaying and/or transmitting S-SSB even if it has received S-SSB from another UE.

In embodiments of the present disclosure, using frequency resources used for mapping synchronization signals and guard regions for PSBCH mapping may be extended and applied to the ideas of the present disclosure.

On the other hand, a CAPC value for a PSBCH or a logical channel corresponding to a PSBCH may be set to the smallest value (meaning the most important). For example, a CAPC value for the synchronization signals S-PSS and/or S-SSS of an S-SSB may be (pre)configured to a specific value (e.g., 1 or 4). For example, a CAPC value for the synchronization signals S-PSS and/or S-SSS of an S-SSB may be selected by a UE (by a UE implementation). For example, the corresponding CAPC values for each channel and/or signal in an S-SSB may be different, and/or in the above situation, the representative CAPC value for the S-SSB may be set to the smallest CAPC value and/or the largest CAPC value and/or the CAPC value of a specific channel or signal (e.g., PSBCH and/or S-PSS and/or S-SSS).

Embodiments of the disclosure may be applied in any combination of the above, depending on whether the transmission is within or outside the channel occupancy time (COT). Embodiments of the present disclosure may be applied in different combinations of the above depending on the shape of the COT (e.g., whether it is semi-static or time-varying). Embodiments of the present disclosure may be applied in different combinations of the above, depending on the carrier, depending on the presence or absence of guards between RB sets, or depending on regulations.

The scheme for transmitting a synchronization signal and PSBCH in the embodiments of the present disclosure may be applied differently depending on the SL operating region and regulations.

In embodiments of the present disclosure, the scheme for transmitting a synchronization signal and PSBCH may be applied differently depending on the size of the subcarrier space. For example, at 15 kHz and 30 kHz, the synchronization signal and/or PSBCH may be mapped to discontinuous RBs, such as in an interlace structure, while at 60 kHz, the synchronization signal and/or PSBCH may be mapped to contiguous RBs.

In embodiments of the present disclosure, the scheme for transmitting a synchronization signal and PSBCH may be different for each S-SSB time resource (e.g., sl-SSB-TimeAllocation1, sl-SSB-TimeAllocation2, sl-SSB-TimeAllocation3).

For example, synchronization signal and/or PSBCH mapping schemes may be (pre-)configured per SL BWP and/or per SL carrier and/or per RB set and/or per S-SSB time resource.

The proposed method may be applied to the device described below. First, a processor 202 of a receiving UE may configure at least one BWP. Then, the processor 202 of the receiving UE may control a transceiver 206 of the receiving UE to receive a sidelink-related physical channel and/or a sidelink-related reference signal from a transmitting UE on the at least one BWP.

According to the prior art, SL communication in unlicensed bands is not possible because an operation of SL communication in an unlicensed band is not defined. According to one embodiment of the present disclosure, S-SSB may be transmitted in an unlicensed band, which has the effect of enabling synchronization between UEs, thus enabling SL communication to be performed.

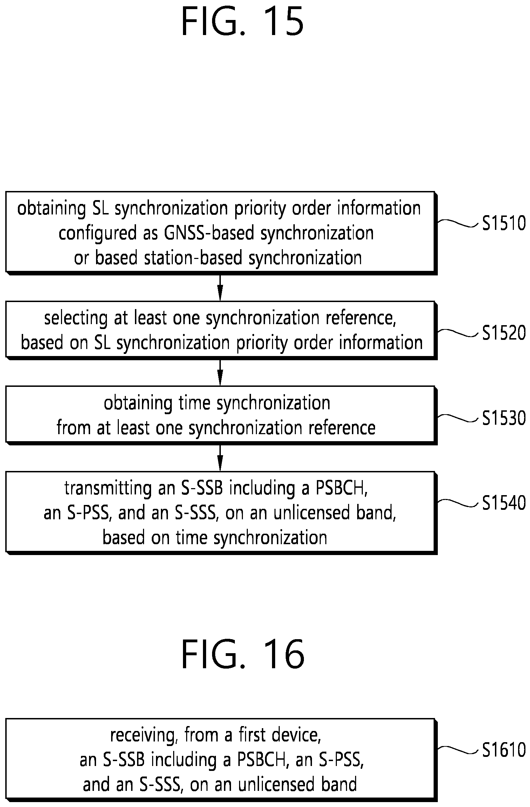

FIG. 15 shows a procedure for a first device to perform wireless communication, according to one embodiment of the present disclosure. The embodiment of FIG. 15 may be combined with various embodiments of the present disclosure.

Referring to FIG. 15, in step S1510, a first device may obtain sidelink, SL, synchronization priority order information configured as global navigation satellite system, GNSS, -based synchronization or based station-based synchronization. In step S1520, the first device may select at least one synchronization reference, based on the SL synchronization priority order information. In step S1530, the first device may obtain time synchronization from the at least one synchronization reference. In step S1540, the first device may transmit a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

For example, the S-SSB may be transmitted based on at least one resource block, RB, set.

For example, the at least one RB set may be included within a channel occupancy time, COT, duration.

For example, additionally, the first device may transmit information related to the at least one RB set.

For example, the information related to the at least one RB set may be transmitted along with the S-SSB.

For example, the S-SSB may be transmitted based on at least one interlace in the at least one RB set.

For example, additionally, the first device may obtain information related to a COT duration. For example, the S-SSB may be transmitted based on the COT duration.

For example, obtaining information related to the COT duration may include: performing an initial channel sensing; and determining the COT duration based on the initial channel sensing.

For example, additionally, the first device may obtain information related to at least one RB set or information related to at least one interlace.

For example, additionally, the first device may perform channel sensing for a transmission of the S-SSB. For example, the S-SSB may be transmitted based on a result of the channel sensing being IDLE.

For example, the channel sensing may include a listen before talk, LBT, operation.

For example, the channel sensing may be performed from a time point preceding a time point of a resource for the transmission of the S-SSB by a specific time interval, to the time point of the resource.

For example, the channel sensing may be performed based on the resource for the transmission of the S-SSB being included within a COT duration.

The embodiments described above may be applied to various devices described below. First, a processor 102 of a first device 100 may obtain sidelink, SL, synchronization priority order information configured as global navigation satellite system, GNSS, -based synchronization or based station-based synchronization. And, the processor 102 of the first device 100 may select at least one synchronization reference, based on the SL synchronization priority order information. And, the processor 102 of the first device 100 may obtain time synchronization from the at least one synchronization reference. And, the processor 102 of the first device 100 may control a transceiver 106 to transmit a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

According to an embodiment of the present disclosure, a first device performing wireless communication may be proposed. For example, the first device may comprise: at least one transceiver; at least one processor; and at least one memory operably connected to the at least one processor and storing instructions. For example, the instructions, based on being executed by the at least one processor, may cause the first device to perform operations. For example, the operations may comprise: obtaining sidelink, SL, synchronization priority order information configured as global navigation satellite system, GNSS, -based synchronization or based station-based synchronization; selecting at least one synchronization reference, based on the SL synchronization priority order information; obtaining time synchronization from the at least one synchronization reference; and transmitting a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

For example, the S-SSB may be transmitted based on at least one resource block, RB, set.

For example, the at least one RB set may be included within a channel occupancy time, COT, duration.

For example, additionally, the first device may transmit information related to the at least one RB set.

For example, the information related to the at least one RB set may be transmitted along with the S-SSB.

For example, the S-SSB may be transmitted based on at least one interlace in the at least one RB set.

For example, additionally, the first device may obtain information related to a COT duration. For example, the S-SSB may be transmitted based on the COT duration.

For example, obtaining information related to the COT duration may include: performing an initial channel sensing; and determining the COT duration based on the initial channel sensing.

For example, additionally, the first device may obtain information related to at least one RB set or information related to at least one interlace.

For example, additionally, the first device may perform channel sensing for a transmission of the S-SSB. For example, the S-SSB may be transmitted based on a result of the channel sensing being IDLE.

For example, the channel sensing may include a listen before talk, LBT, operation.

For example, the channel sensing may be performed from a time point preceding a time point of a resource for the transmission of the S-SSB by a specific time interval, to the time point of the resource.

For example, the channel sensing may be performed based on the resource for the transmission of the S-SSB being included within a COT duration.

According to an embodiment of the present disclosure, a device adapted to control a first user equipment, UE, may be proposed. For example, the device may comprise: at least one processor; and at least one memory operably connected to the at least one processor and storing instructions. For example, the instructions, based on being executed by the at least one processor, may cause the first UE to perform operations. For example, the operations may comprise: obtaining sidelink, SL, synchronization priority order information configured as global navigation satellite system, GNSS, -based synchronization or based station-based synchronization; selecting at least one synchronization reference, based on the SL synchronization priority order information; obtaining time synchronization from the at least one synchronization reference; and transmitting a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

According to an embodiment of the present disclosure, a non-transitory computer-readable storage medium storing instructions may be proposed. For example, the instructions, based on being executed, may cause a first device to: obtain sidelink, SL, synchronization priority order information configured as global navigation satellite system, GNSS, -based synchronization or based station-based synchronization; select at least one synchronization reference, based on the SL synchronization priority order information; obtain time synchronization from the at least one synchronization reference; and transmit a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

FIG. 16 shows a procedure for a second device to perform wireless communication, according to one embodiment of the present disclosure. The embodiment of FIG. 16 may be combined with various embodiments of the present disclosure.

Referring to FIG. 16, a second device may receive, from a first device, a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band. For example, the S-SSB may be transmitted by the first device based on time synchronization obtained from at least one synchronization reference, the at least one synchronization reference may be selected by the first device based on a sidelink, SL, synchronization priority order information, the SL synchronization priority order information may be configured as global navigation satellite system, GNSS, -based synchronization or based station-based synchronization.

For example, the S-SSB may be received based on at least one resource block, RB, set.

The embodiments described above may be applied to various devices described below. First, a processor 202 of a second device 200 may control a transceiver 206 to receive, from a first device 100, a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band. For example, the S-SSB may be transmitted by the first device 100 based on time synchronization obtained from at least one synchronization reference, the at least one synchronization reference may be selected by the first device 100 based on a sidelink (SL) synchronization priority order information, the SL synchronization priority order information may be configured as global navigation satellite system, GNSS, -based synchronization or based station-based synchronization.

According to an embodiment of the present disclosure, a second device performing wireless communication may be proposed. For example, the second device may comprise: at least one transceiver; at least one processor; and at least one memory operably connected to the at least one processor and storing instructions. For example, the instructions, based on being executed by the at least one processor, may cause the second device to perform operations. For example, the operations may comprise: receiving, from a first device, a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, wherein the S-SSB may be transmitted by the first device based on time synchronization obtained from at least one synchronization reference, wherein the at least one synchronization reference may be selected by the first device based on a sidelink, SL, synchronization priority order information, wherein the SL synchronization priority order information may be configured as global navigation satellite system, GNSS, -based synchronization or based station-based synchronization.

For example, the S-SSB may be received based on at least one resource block, RB, set.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-

description, the same reference symbols may denote the same or corresponding hardware blocks, software blocks, or functional blocks unless described otherwise.

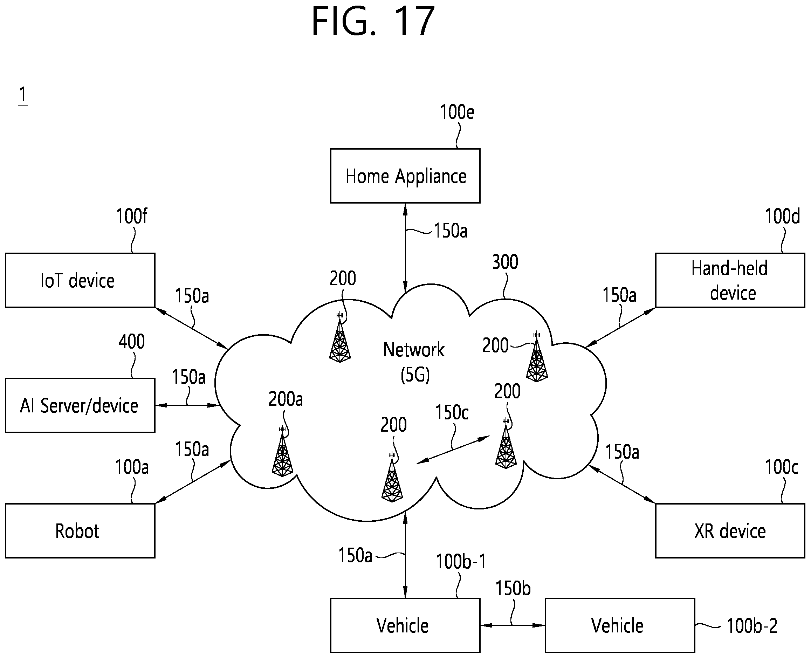

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

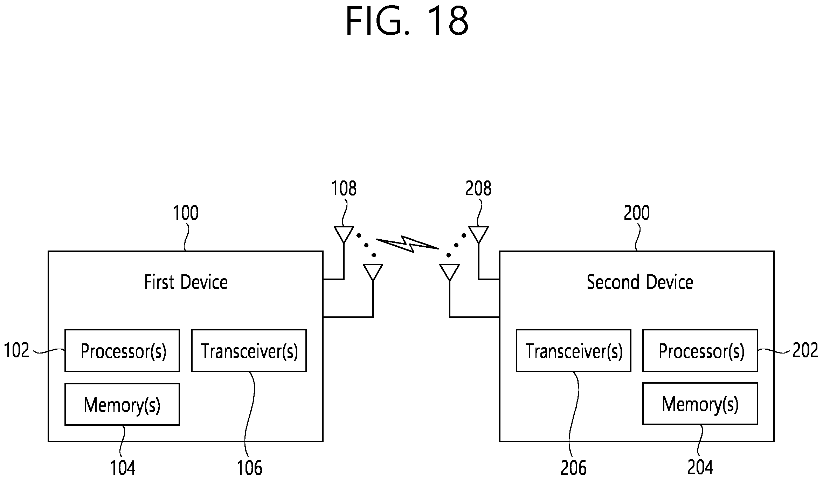

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

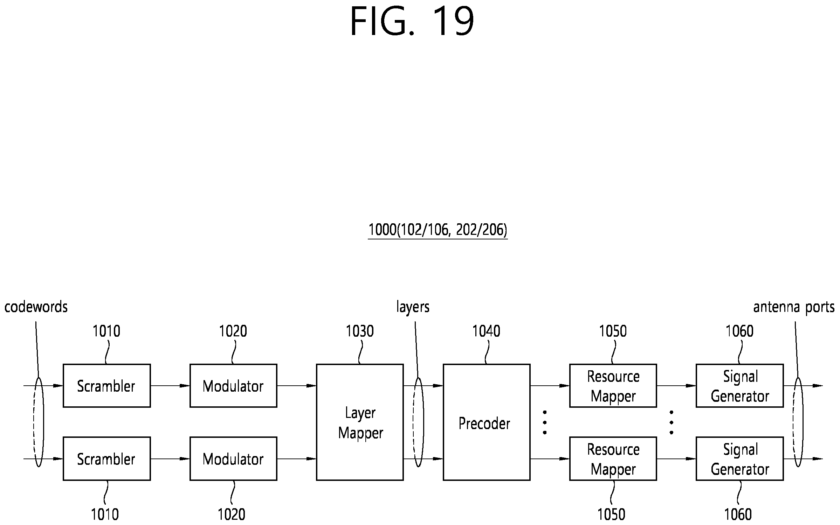

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

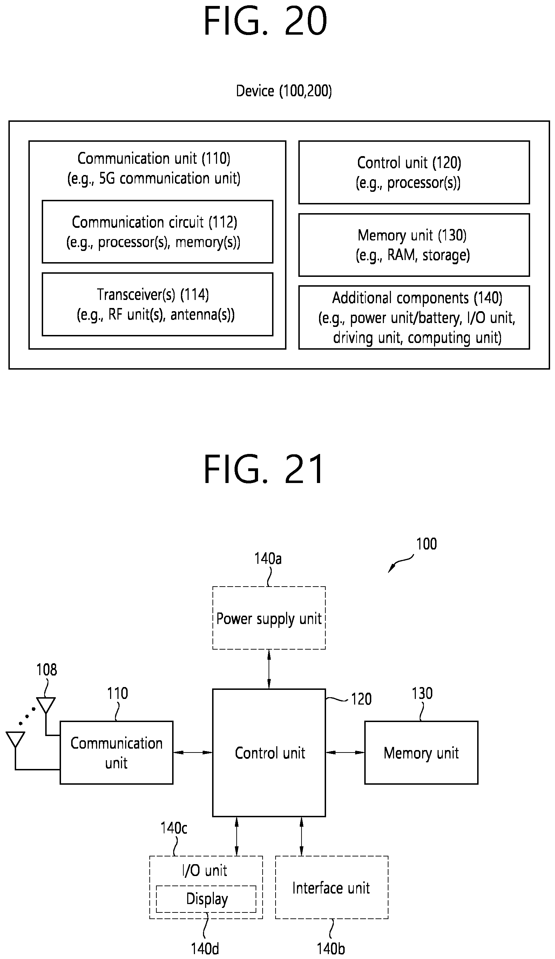

FIG. 20 shows another example of a wireless device, based on an embodiment of the present disclosure. The wireless device may be implemented in various forms according to a usecase/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

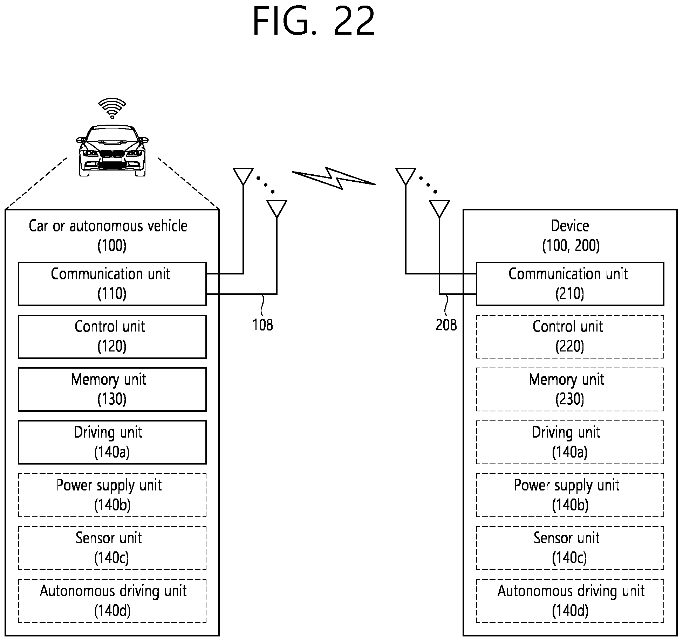

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.   A method for performing, by a first device, wireless communication, the method comprising:

obtaining sidelink, SL, synchronization priority order information configured as global navigation satellite system, GNSS, -based synchronization or based station-based synchronization;
selecting at least one synchronization reference, based on the SL synchronization priority order information;
obtaining time synchronization from the at least one synchronization reference; and
transmitting a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

2. The method of claim 1, wherein the S-SSB is transmitted based on at least one resource block, RB, set.

3. The method of claim 2, wherein the at least one RB set is included within a channel occupancy time, COT, duration.

4. The method of claim 2, further comprising:
transmitting information related to the at least one RB set.

5. The method of claim 4, wherein the information related to the at least one RB set is transmitted along with the S-SSB.

6. The method of claim 2, wherein the S-SSB is transmitted based on at least one interlace in the at least one RB set.

7. The method of claim 1, further comprising:

   obtaining information related to a COT duration,
   wherein the S-SSB is transmitted based on the COT duration.

8. The method of claim 7, wherein obtaining information related to the COT duration includes:

   performing an initial channel sensing; and
   determining the COT duration based on the initial channel sensing.

9. The method of claim 1, further comprising:
obtaining information related to at least one RB set or information related to at least one interlace.

10. The method of claim 1, further comprising:

    performing channel sensing for a transmission of the S-SSB,
    wherein the S-SSB is transmitted based on a result of the channel sensing being IDLE.

11. The method of claim 10, wherein the channel sensing includes a listen before talk, LBT, operation.

12. The method of claim 10, wherein the channel sensing is performed from a time point preceding a time point of a resource for the transmission of the S-SSB by a specific time interval, to the time point of the resource.

13. The method of claim 10, wherein the channel sensing is performed based on the resource for the transmission of the S-SSB being included within a COT duration.

14. A first device performing wireless communication, the first device comprising:

    at least one transceiver;
    at least one processor; and
    at least one memory operably connected to the at least one processor and storing instructions that, based on being executed by the at least one processor, cause the first device to perform operations,
    wherein the operations comprise:

       obtaining sidelink, SL, synchronization priority order information configured as global navigation satellite system, GNSS, -based synchronization or based station-based synchronization;
       selecting at least one synchronization reference, based on the SL synchronization priority order information;
       obtaining time synchronization from the at least one synchronization reference; and
       transmitting a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

15. A device adapted to control a first user equipment, UE, the device comprising:

at least one processor; and
at least one memory operably connected to the at least one processor and storing instructions that, based on being executed by the at least one processor, cause the first UE to perform operations,
wherein the operations comprise:

obtaining sidelink, SL, synchronization priority order information configured as global navigation satellite system, GNSS, -based synchronization or based station-based synchronization;
selecting at least one synchronization reference, based on the SL synchronization priority order information;
obtaining time synchronization from the at least one synchronization reference; and
transmitting a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

16. A non-transitory computer-readable storage medium storing instructions that, based on being executed, cause a first device to:

obtain sidelink, SL, synchronization priority order information configured as global navigation satellite system, GNSS, -based synchronization or based station-based synchronization;
select at least one synchronization reference, based on the SL synchronization priority order information;
obtain time synchronization from the at least one synchronization reference; and
transmit a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band, based on the time synchronization.

17. A method for performing, by a second device, wireless communication, the method comprising:

receiving, from a first device, a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band,
wherein the S-SSB is transmitted by the first device based on time synchronization obtained from at least one synchronization reference,
wherein the at least one synchronization reference is selected by the first device based on a sidelink, SL, synchronization priority order information,
wherein the SL synchronization priority order information is configured as global navigation satellite system, GNSS, -based synchronization or based station-based synchronization.

18. The method of claim 17, wherein the S-SSB is received based on at least one resource block, RB, set.

19. A second device performing wireless communication, the second device comprising:

at least one transceiver;
at least one processor; and
at least one memory operably connected to the at least one processor and storing instructions that, based on being executed by the at least one processor, cause the second device to perform operations,
wherein the operations comprise:

receiving, from a first device, a sidelink synchronization signal block, S-SSB, including a physical sidelink broadcast channel, PSBCH, a sidelink primary synchronization signal, S-PSS, and a sidelink secondary synchronization signal, S-SSS, on an unlicensed band,
wherein the S-SSB is transmitted by the first device based on time synchronization obtained from at least one synchronization reference,
wherein the at least one synchronization reference is selected by the first device based on a sidelink, SL, synchronization priority order information,

wherein the SL synchronization priority order information is configured as global navigation satellite system, GNSS, -based synchronization or based station-based synchronization.

20. The second device of claim 19, wherein the S-SSB is received based on at least one resource block, RB, set.

# FIG. 1

# FIG. 2

(a)

(b)

(c)

(d)

PC5-U

PC5-C

EP 4 503 773 A1

# FIG. 3

# FIG. 4

Resource grid

A carrier
(up to 3300 subcarriers,
i.e., 275 RBs)

A BWP

1RB=12 subcarriers

1 RE

1 subcarrier

1 symbol

l=0

k=0

# FIG. 5

PRB N3

PRB 1
PRB 0

$N_{BWP, 2}^{size}$

PRB N2

PRB 1
PRB 0

$N_{BWP, 1}^{size}$

PRB N1

PRB 1

PRB 0

$N_{BWP, 0}^{size}$

CRB 0

$N_{BWP, 0}^{start}$

$N_{BWP, 1}^{start}$

$N_{BWP, 2}^{start}$

Carrier
Bandwidth

Freq.

Time

PRB 0 (Point A) in reference resource block

# FIG. 6

(a)

(b)

# FIG. 7

(a)

(b)

(c)

● : TX UE

⊘ : RX UE

# FIG. 8

PCC (Licensed band)

BS

SCC (Unlicensed band)

UE

(a) Carrier aggregation between L-band and U-band

PCC (Unlicensed band)

BS

SCC (Unlicensed band)

UE

(b) Standalone U-band(s)

# FIG. 9

Unoccupied

Occupied

| Channel Occupancy Time | | | Channel Occupancy Time | | |

Extended CCA

CCA

# FIG. 10

Frequency

LBT-SB#(K-1)
(e.g., 20MHz)

⋮

BWP

LBT-SB#1
(e.g., 20MHz)

LBT-SB#0
(e.g., 20MHz)

# FIG. 11

```
┌─────────────────────┐
│      Start CAP      │ ～ S110
└─────────────────────┘
           │
           ▼
┌─────────────────────┐
│       Step 1        │ ～ S120
└─────────────────────┘
           │
           ▼        S130
       ╱───────╲              YES    ┌──────────────────┐      ┌──────────────────┐
      ╱  Step 4  ╲───────────────────│   Terminate CAP  │─────▶│  Transmit Tx bust │
      ╲          ╱                    └──────────────────┘      └──────────────────┘
       ╲───────╱                            S132                      S134
           │ NO
           ▼
┌─────────────────────┐
│       Step 2        │ ～ S140
└─────────────────────┘
           │        S150
           ▼
       ╱───────╲
 YES  ╱  Step 3  ╲
◀─────╲          ╱
       ╲───────╱
           │ NO
           ▼
┌─────────────────────┐
│       Step 5        │ ～ S160
└─────────────────────┘
           │        S170
           ▼
       ╱───────╲
 NO   ╱  Step 6  ╲
◀─────╲          ╱
       ╲───────╱
           │ YES
```

EP 4 503 773 A1

# FIG. 12

Start CAP — S210

Step 1 — S220

Step 4 — S230

YES → Terminate CAP — S232 → Transmit Tx bust — S234

NO

Step 2 — S240

Step 3 — S250

YES

NO

Step 5 — S260

Step 6 — S270

NO

YES

# FIG. 13

RB set 2

f

RB set 1

☐ : Interlace 4    ▦ : Interlace 3    ▨ : Interlace 2

▧ : Interlace 1    ▨ : Interlace 0

# FIG. 14

```
┌─────────────┐                          ┌──────────────┐
│ First device│                          │ Second device│
└──────┬──────┘                          └───────┬──────┘
       │                                         │
  ┌────┴────────────┐                            │
  │ obtaining COT duration│    ~S1410            │
  │ information     │                            │
  └────┬────────────┘                            │
  ┌────┴────────────┐                            │
  │ determining a resource│   ~S1420            │
  └────┬────────────┘                            │
  ┌────┴────────────┐                            │
  │ channel sensing │        ~S1430             │
  └────┬────────────┘                            │
       │      S-SSB transmission                 │
       ├────────────────────────────────────────>│  ~S1440
       │                                         │
```

# FIG. 15

obtaining SL synchronization priority order information configured as GNSS-based synchronization or based station-based synchronization — S1510

selecting at least one synchronization reference, based on SL synchronization priority order information — S1520

obtaining time synchronization from at least one synchronization reference — S1530

transmitting an S-SSB including a PSBCH, an S-PSS, and an S-SSS, on an unlicensed band, based on time synchronization — S1540

# FIG. 16

receiving, from a first device, an S-SSB including a PSBCH, an S-PSS, and an S-SSS, on an unlicensed band — S1610

# FIG. 17

# FIG. 18

# FIG. 19

EP 4 503 773 A1

1000(102/106, 202/206)

# FIG. 20

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 21

140a

100

Power supply unit

108

110

120

130

Communication unit

Control unit

Memory unit

140c

I/O unit

Display

Interface unit

140d

140b

# FIG. 22

Car or autonomous vehicle
(100)

| |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device
(100, 200)

| |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

208

## INTERNATIONAL SEARCH REPORT

| | International application No. |
| --- | --- |
| | **PCT/KR2023/004182** |

**A. CLASSIFICATION OF SUBJECT MATTER**

**H04W 56/00**(2009.01)i; **H04W 72/04**(2009.01)i; **H04W 48/10**(2009.01)i; **H04L 27/26**(2006.01)i; **H04W 92/18**(2009.01)i; **H04W 72/20**(2023.01)i

According to International Patent Classification (IPC) or to both national classification and IPC

**B. FIELDS SEARCHED**

Minimum documentation searched (classification system followed by classification symbols)

H04W 56/00(2009.01); H04L 5/00(2006.01); H04W 4/40(2018.01); H04W 4/46(2018.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL 동기화 우선순위(SL synchronization priority), 동기화 기준(synchronization reference), 시간 동기(time synchronization), S-SSB

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2022-0031672 A (LG ELECTRONICS INC.) 11 March 2022 (2022-03-11)<br>See paragraphs [0164]-[0176]; claim 1; and figure 22. | 1,14-17,19 |
| Y | | 10 |
| A | | 2-9,11-13,18,20 |
| Y | CN 110300459 B (VIVO MOBILE COMMUNICATION CO., LTD.) 18 May 2021 (2021-05-18)<br>See claim 1. | 10 |
| A | WO 2021-162709 A1 (NOKIA TECHNOLOGIES OY et al.) 19 August 2021 (2021-08-19)<br>Sere paragraph [0070]; claim 1; and figure 5. | 1-20 |
| A | KR 10-2021-0109637 A (LG ELECTRONICS INC.) 06 September 2021 (2021-09-06)<br>See paragraphs [0197]-[0216]; and figure 21. | 1-20 |

☑ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 June 2023** | **12 June 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/004182** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0153640 A (LG ELECTRONICS INC.) 17 December 2021 (2021-12-17)<br>See paragraphs [0224]-[0241]; and figure 20. | 1-20 |

Form PCT/ISA/210 (second sheet) (July 2022)

**INTERNATIONAL SEARCH REPORT**
Information on patent family members

| International application No. |
| --- |
| **PCT/KR2023/004182** |

| Patent document cited in search report | | | Publication date (day/month/year) | Patent family member(s) | | | Publication date (day/month/year) |
| --- | --- | --- | --- | --- | --- | --- | --- |
| KR | 10-2022-0031672 | A | 11 March 2022 | CN | 114586308 | A | 03 June 2022 |
| | | | | EP | 3996316 | A1 | 11 May 2022 |
| | | | | US | 11552764 | B2 | 10 January 2023 |
| | | | | US | 2022-0166582 | A1 | 26 May 2022 |
| | | | | US | 2023-0103732 | A1 | 06 April 2023 |
| | | | | WO | 2021-029735 | A1 | 18 February 2021 |
| CN | 110300459 | B | 18 May 2021 | CA | 3094552 | A1 | 26 September 2019 |
| | | | | CN | 110300459 | A | 01 October 2019 |
| | | | | CN | 113225834 | A | 06 August 2021 |
| | | | | CN | 113225834 | B | 15 November 2022 |
| | | | | EP | 3771127 | A1 | 27 January 2021 |
| | | | | EP | 3771127 | A4 | 12 May 2021 |
| | | | | EP | 3771127 | B1 | 01 March 2023 |
| | | | | US | 2021-0022191 | A1 | 21 January 2021 |
| | | | | WO | 2019-179262 | A1 | 26 September 2019 |
| WO | 2021-162709 | A1 | 19 August 2021 | CN | 115152282 | A | 04 October 2022 |
| | | | | EP | 4104546 | A1 | 21 December 2022 |
| | | | | US | 2023-0124916 | A1 | 20 April 2023 |
| KR | 10-2021-0109637 | A | 06 September 2021 | CN | 113785628 | A | 10 December 2021 |
| | | | | US | 2022-0210747 | A1 | 30 June 2022 |
| | | | | WO | 2020-209643 | A1 | 15 October 2020 |
| KR | 10-2021-0153640 | A | 17 December 2021 | US | 2022-0201629 | A1 | 23 June 2022 |
| | | | | WO | 2020-226464 | A1 | 12 November 2020 |

Form PCT/ISA/210 (patent family annex) (July 2022)